(19) Europäisches Patentamt
European Patent Office
Office européen des brevets

(11) EP 3 434 373 A1

(12) EUROPÄISCHE PATENTANMELDUNG

(43) Veröffentlichungstag:
30.01.2019 Patentblatt 2019/05

(51) Int Cl.:
*B01L 3/02* (2006.01)

(21) Anmeldenummer: 17183583.8

(22) Anmeldetag: 27.07.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(71) Anmelder: Eppendorf AG
22339 Hamburg (DE)

(72) Erfinder:
• DUNKER, Uwe
  20253 Hamburg (DE)
• SCHICKE, Michael
  24568 Kaltenkirchen (DE)
• DAVID, Tobias
  22941 Bargteheide (DE)

(74) Vertreter: Kirchner, Christian
  Wallinger Ricker Schlotter Tostmann
  Patent- und Rechtsanwälte Partnerschaft mbB
  Zweibrückenstrasse 5 - 7
  80331 München (DE)

(54) **PIPETTIERVORRICHTUNG MIT FUNKTIONSPRÜFUNG UND VERFAHREN ZUR FUNKTIONSPRÜFUNG EINER PIPETTIERVORRICHTUNG**

(57) Die Erfindung bezieht sich auf Verfahren und Pipettiervorrichtungen zur Erkennung mindestens eines Leistungszustandes der dem Pipettieren dienenden Ansaugmechanik einer Pipettiervorrichtung. Ein solches Verfahren und eine solche Pipettiervorrichtung nutzt jeweils eine elektrische Steuereinrichtung, eine Ansaugmechanik, die u.a. einen elektrisch angetriebenen Motor, aufweist, eine einen Drucksensor aufweisende oder eine Motorstromerfassung erfassende Messeinrichtung zur Charakterisierung der physikalischen Arbeit, die durch die Ansaugmechanik geleistet wird, wobei die Pipettiervorrichtung teilweise mit einer Widerstandseinrichtung versehen sein kann, mittels der während der Durchführung des Verfahrens der mechanische, insbesondere der hydraulische Widerstand der Ansaugmechanik gegenüber der vom Motor geleisteten physikalischen Arbeit erhöht wird, wobei die Steuereinrichtung zur Erkennung eines Leistungszustandes der Pipettiervorrichtung dazu eingerichtet ist, mindestens einen Wert dieser Messgröße in Abhängigkeit von einer definierten Bewegung des Kolbenelements zu erfassen, den mindestens einen Wert dieser Messgröße in der Datenspeichereinrichtung zu speichern.

Fig. 2b

**Beschreibung**

Die Erfindung bezieht sich auf eine elektrische Pipettiervorrichtung mit Funktionsprüfung und ein Verfahren zur Funktionsprüfung einer elektronischen Pipettiervorrichtung.

Als Pipettiervorrichtungen werden vorliegend handgehaltene Laborgeräte bezeichnet, die üblicherweise in medizinischen, biologischen, biochemischen, chemischen und anderen Laboratorien verwendet werden. Sie dienen im Labor der präzisen Dosierung sowie dem Transport von fluiden Proben mit kleinen Volumina und dem Transfer solcher Volumina zwischen unterschiedlichen Probenbehältnissen. Bei Pipettiervorrichtungen werden z.B. flüssige Proben mittels Unterdruck in Pipettenbehälter, z.B. Pipettenspitzen, eingesaugt, dort gelagert, und am Zielort wieder aus diesen abgegeben. Eine elektronische Pipettiervorrichtung verwendet mindestens einen elektronischen Betriebsparameter, der den Betrieb der Pipettiervorrichtung zumindest beeinflusst oder steuert. Elektronische Pipettiervorrichtungen werden nachfolgend auch abgekürzt mit dem Begriff "Pipettiervorrichtungen" bezeichnet.

Zu den Pipettiervorrichtungen gehören z.B. handgehaltene Pipetten und Repetierpipetten, wobei letztere auch als Dispenser bezeichnet werden. Unter einer Pipette wird ein Gerät verstanden, bei dem mittels einer Bewegungseinrichtung, die dem Gerät zugeordnet ist und die insbesondere einen Kolben aufweisen kann, eine zu pipettierende Probe in einen mit der Pipette lösbar verbundenen Pipettierbehälter, insbesondere eine Pipettenspitze, eingesaugt werden kann. Bei einer Luftpolsterpipette ist der Kolben dem Gerät zugeordnet und zwischen der zu pipettierenden Probe und dem Kolbenende befindet sich ein Luftpolster, das beim Aufnehmen der Probe in den Pipettierbehälter unter einem Unterdruck steht, durch den die Probe in den Pipettierbehälter gesaugt wird und/oder im Pipettierbehälter gehalten wird. Unter einem Dispenser wird ein Gerät verstanden, bei dem mittels einer Bewegungseinrichtung, die insbesondere einen Kolben aufweisen kann, ein zu pipettierendes Volumen in einen mit dem Dispenser verbundenen Pipettierbehälter, insbesondere eine nach dem Spritzenprinzip ausgestaltete Dispenserspitze, eingesaugt werden kann, wobei die Bewegungseinrichtung zumindest teilweise dem Pipettierbehälter zugeordnet ist, indem z.B. der Kolben im Pipettierbehälter angeordnet ist. Beim Dispenser befindet sich das Kolbenende sehr nahe an der zu pipettierenden Probe oder in Kontakt mit dieser, weshalb man den Dispenser auch als Direktverdrängerpipette bezeichnet. Pipettenspitzen oder Dispenserspritzen bestehen vorzugsweise aus Kunststoff und können als Einmalartikel nach Gebrauch weggeworfen bzw. durch eine frische Pipettenspitze oder Dispenserspritze ersetzt werden. Pipettenspitzen oder Dispenserspritze werden in verschiedenen Größen für Dosierungen in verschiedenen Volumenbereichen zur Verfügung gestellt.

Bei einer Pipettiervorrichtung kann die durch eine einzelne Betätigung abgegebene Probenmenge der in das Gerät aufgesaugten Probenmenge entsprechen. Es kann aber auch vorgesehen sein, dass eine mehreren Abgabemengen entsprechende aufgenommene Probenmenge schrittweise wieder abgegeben wird. Zudem wird zwischen Einkanal-Pipettiervorrichtungen und Mehrkanal-Pipettiervorrichtungen unterschieden, wobei Einkanal-Pipettiervorrichtungen nur einen einzigen Abgabe-/Aufnahmekanal enthalten und Mehrkanal-Pipettiervorrichtungen mehrere Abgabe-/Aufnahmekanäle enthalten, die insbesondere das parallele Abgeben oder Aufnehmen mehrerer Proben erlauben.

Beispiele für handgehaltene, elektronische Pipetten sind die Eppendorf Xplorer® und Xplorer® plus der Eppendorf AG, Deutschland, Hamburg; Beispiele für handgehaltene, elektronische Dispenser sind die Multipette® E3 und Multipette® E3x der Eppendorf AG, Deutschland, Hamburg. Diese Geräte werden, wie auch die Pipettiervorrichtung gemäß der vorliegenden Erfindung, elektrisch betrieben, indem das pipettierende bewegbare Teil, insbesondere der Kolben, durch eine elektrische Motoreinrichtung der Pipettiervorrichtung bewegt wird.

Elektrische Pipettiervorrichtungen bieten zahlreiche Vorteile gegenüber nichtelektronischen Pipettiervorrichtungen, da eine Vielzahl von Funktionen in einfacher Weise implementiert werden können. Insbesondere lässt sich bei elektronischen Pipettiervorrichtungen die Durchführung von bestimmten, programmgesteuerten Pipettiervorgängen vereinfachen, indem diese automatisiert oder teil-automatisiert werden. Typische Betriebsparameter zum Steuern solcher Pipettiervorgänge mittels entsprechender Pipettierprogramme betreffen das Volumen beim Ansaugen oder Abgeben von Flüssigkeit, deren Reihenfolge und Wiederholungen, und gegebenenfalls zeitliche Parameter bei der zeitlichen Verteilung dieser Vorgänge.

Pipettiervorrichtungen dienen der Dosierung und somit der Abmessung von Flüssigkeitsvolumina. Als Messmittel unterliegen Pipettiervorrichtungen in vielen Fällen der Messmittelüberwachung. Dabei wird eine regelmäßige Kalibrierung der Instrumente gefordert. Die Kalibrierung muss unter definierten physikalischen Bedingungen von qualifiziertem Personal unter Beachtung der ISO8655 durchgeführt werden. Typischerweise erfolgt dieser relativ zeit- und kostenintensive Vorgang in 6 bis 12 monatigen Abständen. Bei spezifikationskonformem Einsatz der Pipettiervorrichtungen sind solche Kontrollintervalle in der Regel ausreichend. Typische Szenarien der Laborarbeit beinhalten aber Situationen, in denen die Anwender über den Gerätestatus im Zweifel sind, insbesondere wenn mehrere Anwender dasselbe Gerät verwenden. Es besteht deshalb der Wunsch auf Seiten der Anwender nach einer einfachen, zu jedem Zeitpunkt durchführbaren Funktionsprüfung für die Pipettiervorrichtung, die einen Leistungszustand der Pipettiervorrichtung ermittelt und insbesondere eine zuverlässige gut/schlecht-Aussage zulässt.

Die Dokumente EP 0 658 769 B1 und WO 96/41200 A1 beschreiben stationäre Pipettierautomaten mit integrierter Dichtigkeitsprüfung, bei welchen ein automatisiertes Dichtigkeitsprüfungsverfahren angewandt wird. Dieses sieht vor, einen mit dem Ansaugsystem verbundenen Pipettierkopf automatisch zu positionieren, um in verschiedenen Positionen den im Inneren ihres Ansaugsystems anliegenden (Unter-)Drucks durch einen in das Ansaugsystem integrierten Drucksensors zu messen. Für nicht vollautomatisiert arbeitende, sondern manuell gehandhabte Pipettiervorrichtungen ist dieser Ansatz nicht anwendbar.

Es wurde deshalb im Dokument EP 2 494 328 B1 ein Verfahren zur Prüfung der Dichtigkeit einer handgehaltenen Pipettiervorrichtung mittels einer Dichtigkeitsprüfvorrichtung vorgeschlagen, die in Kombination mit der Pipettiervorrichtung verwendet wird, indem sie unter vorgegebenen Prüfbedingungen den an der Pipettenspitze anliegenden Druck misst und mit einem Referenzwert vergleicht. Dazu weist die Dichtigkeitsprüfvorrichtung eine Vakuumpumpe, Pipettenspitzenaufnahmen, Leitungen, Ventile, eine elektronische Steuereinrichtung mit Datenspeicher und Anzeigeneinrichtung sowie einen Drucksensor auf. Diese Lösung bietet den Vorteil, das zur Prüfung mehrerer Pipettiervorrichtungen nur eine einzige Dichtigkeitsprüfvorrichtung benötigt wird. Andererseits hängt die Funktionsprüfung der mehreren Pipettiervorrichtungen in dem Labor kritisch von der Funktionsfähigkeit der einzigen Prüfvorrichtung ab, die als separates Messgerät separat gewartet werden muss und verfügbar sein muss.

In ähnlicher Weise beschreibt das Dokument EP 0 571 100 A1 eine handgehaltene Pipettiervorrichtung, deren Unterdruckzylinder von außen mit einem Drucksensor verbunden wird, um beim Pipettieren eines gewünschten Volumens durch Vergleich mit einer vorab gewonnenen Referenzdruckkurve Rückschlüsse auf die Dichtigkeit des Unterdruckzylinders zu ermöglichen. Dieser Ansatz ist ebenfalls auf die Ermittlung von Dichtigkeitsproblemen an der Pipette gerichtet.

Auch US 2014/0137980 A1 beschreibt ein Verfahren zum Erkennen von Anomalien beim Pipettieren eines gewünschten Volumens mittels einer Pipettiervorrichtung, die einen integrierten Drucksensor aufweist. Es werden vorab zwei Referenzdruckkurven ermittelt und als Grundlage für eine Schätzung verwendet, ob der beim Pipettieren eines beliebigen Volumens ermittelte Druckverlauf in einem erwarteten Bereich liegt.

Die genannten Ansätze zur Funktionsprüfung bei Pipettiervorrichtungen sind teilweise aufwändig und im Umfang der Funktionsprüfung beschränkt. Der vorliegenden Erfindung liegt deshalb die Aufgabe zugrunde, verbesserte Verfahren zur Funktionsprüfung bei einer Pipettiervorrichtung und verbesserte Pipettiervorrichtungen mit Funktionsprüfung bereitzustellen.

Die Erfindung löst diese Aufgabe insbesondere durch das Verfahren nach Anspruch 1, das Verfahren nach Anspruch 2, die Pipettiervorrichtung nach Anspruch 12 und die die Pipettiervorrichtung nach Anspruch 15. Bevorzugte Ausgestaltungen sind insbesondere Gegenstände der Unteransprüche.

Ein erfindungsgemäßes Verfahren in der ersten bevorzugten Ausführungsform dient der Erkennung mindestens eines Leistungszustandes der dem Pipettieren dienenden Ansaugmechanik einer Pipettiervorrichtung, insbesondere einer Pipette oder einer Repetierpipette, wobei die Ansaugmechanik einen elektrisch angetriebenen Motor, eine Kolbenkammer und ein darin beweglich angeordnetes und mittels des Motors angetriebenes Kolbenelement aufweist, durch dessen Bewegung das Ansaugen eines Fluids unter Ausbilden einer Fluidströmung durch einen offenen Ansaugkanal der Kolbenkammer bewirkbar ist, wobei die Pipettiervorrichtung dazu eingerichtet ist, den vom Motor aufgenommenen Motorstrom als Messgröße zur Charakterisierung der physikalischen Arbeit zu erfassen, die durch das elektrisch angetriebene Bewegen dieses Kolbenelements mittels der Ansaugmechanik geleistet wird, und

wobei das Verfahren die folgenden, durch eine datenverarbeitende Steuereinrichtung der Pipettiervorrichtung ausführbaren Schritte aufweist:

a) Erfassen mindestens eines Wertes dieser Messgröße in Abhängigkeit von einer definierten Bewegung des Kolbenelements;

b) Vergleichen der mindestens einen Messgröße mit mindestens einem Referenzwert.

Vorzugsweise ist der Schritt vorgesehen: Speichern dieses mindestens einen Wertes dieser Messgröße in einer Datenspeichereinrichtung der Pipettiervorrichtung. Dieser Schritt wird vorzugsweise nach dem Schritt a) und insbesondere vor dem Schritt b) durchgeführt. Das Speichern zum Zweck einer Datenverarbeitung in Schritt b) kann insbesondere in einem flüchtigen Datenspeicher ablaufen, ein Speichern in einem nichtflüchtigen Datenspeicher kann insbesondere nach dem Schritt b) erfolgen.

Die definierte Bewegung des Kolbenelementes kann insbesondere auch eine Verweilzeit des Kolbens in einer oder mehrerer vorbestimmter Positionen vorsehen. Wenn der Motorstrom während dieser Verweilzeit von einem Referenzwert abweicht, insbesondere wenn sich der Motorstrom in der Verweilposition des Kolbens ändert, beispielsweise in einem Maß reduziert, das außerhalb eines vorbestimmten zulässigen Toleranzbereich liegt, kann daraus auf eine Undichtigkeit in der Ansaugmechanik bzw. der Kolbenkammer rückgeschlossen werden.

Eine weitere bevorzugte Ausführungsform des erfindungsgemäßen Verfahrens zur Bestimmung eines Leistungszustandes, insbesondere zur Ermittlung einer Undichtigkeit der Kolbenkammer, sieht den Schritt vor, das Kolbenelement bis zu einer vorbestimmten Position und/oder bis zum Vorliegen eines vorbestimmten Wertes für die Messgröße zu bewegen, dann das Kolbenelement zu stoppen und/oder den Motor auszuschalten, und nach einer Verweilzeit, die z.B. zwischen 5ms und 5 s gewählt sein kann, den Motor erneut anzufahren und das Kolbenelement weiterzubewegen und/oder die Messgröße zu ermitteln. Alternativ oder zusätzlich ist es bevorzugt, dass der Motor solange betrieben wird, bis der vorbestimmte Wert der Messgröße oder ein anderer vorbestimmter Wert der Messgröße vorliegt, was insbesondere durch wiederholtes Ermitteln der Messgröße ermittelt werden kann. Dieser vorbestimmte Wert der Messgröße kann insbesondere ein maximal erlaubter Motorstrom (maximaler Motorstrom) sein. Der maximale Motorstrom kann der Wert sein, bei dem eine im Motor oder eine in einer elektronischen Steuereinrichtung, insbesondere der datenverarbeitenden Steuereinrichtung der Pipettiervorrichtung, insbesondere auf einer elektronischen Platine, eingebaute Sicherheitseinrichtung den Motor abschaltet. Der maximale Motorstrom kann auch ein anderer vom Hersteller der Pipettiervorrichtung festgelegter Wert sein. Das Verfahren kann insbesondere vorsehen, das Kolbenelement bis zum Erreichen des maximalen Motorstroms zu bewegen, und den Motor dann abzuschalten; im Fall der genannten Sicherheitseinrichtung schaltet sich der Motor automatisch ab, hierbei kann insbesondere die Zeitspanne zwischen dem erneuten Anfahren und dem Abschalten des Motors ermittelt werden. Nach der vorbestimmten Verweilzeit wird der Motor erneut angefahren. Schaltet sich der Motor wegen des sofortigen Erreichens des maximalen Motorstroms sofort wieder ab, lässt dies darauf schließen, dass die Kolbenkammer abgedichtet ist. Schaltet sich der Motor hingegen nicht sofort wieder ab, lässt das auf eine Undichtigkeit schließen, da in diesem Fall erneut Luft aus der Kolbenkammer gezogen wird, bzw. alternativ die in der Kolbenkammer vorhandene Luft erneut komprimiert wird, bis der maximale Motorstrom erreicht wird.

Die nachfolgenden Ausführungen betreffen gleichermaßen eine erfindungsgemäße Pipettiervorrichtung und ein erfindungsgemäßes Verfahren, falls es nicht ausdrücklich anders beschrieben ist. Die genannten optionalen und bevorzugten Maßnahmen können als optionale Verfahrensschritte eines erfindungsgemäßen Verfahrens vorgesehen sein, insbesondere als solche Verfahrensschritte, die in einer entsprechend eingerichteten Pipettiervorrichtung bzw. elektronischen Steuereinrichtung der Pipettiervorrichtung implementiert sein können. Dies kann insbesondere durch einen entsprechend angepassten Steuerprogrammcode realisiert sein, der von der elektronischen Steuereinrichtung ausführbar ist.

Gemäß einem ersten Aspekt der vorliegenden Erfindung wird der vom Elektromotor aufgenommene Strom, auch als Motorstrom bezeichnet, als Parameter herangezogen, um den Leistungszustand einer Pipettiervorrichtung zu ermitteln. In den der Erfindung zugrunde liegenden Versuchen wurde der Motorstrom als optimaler Parameter ermittelt, um nicht nur Fehlerzustände der Ansaugmechanik zu ermitteln sondern den Leistungszustand auch differenzierter zu beurteilen. Dazu ist es vorteilhaft, wenn der mindestens eine Messwert der Messgröße gespeichert wird und in bestimmten Ausführungsformen der Erfindung auch dauerhaft gespeichert wird und somit für spätere Vergleiche verfügbar bleibt.

Gemäß einem weiteren Aspekt der vorliegenden Erfindung ist es besonders vorteilhaft, die Pipettiervorrichtung mit einer Widerstandseinrichtung zu versehen, insbesondere mit einem separaten Verschlusselement für den Ansaugkanal, um den mechanischen und/oder hydraulischen Widerstand in vordefinierter Weise zu erhöhen, der im Betrieb der Ansaugmechanik anliegt und eine entsprechende, zu erfassende Motorleistung erfordert.

Der elektrische Motor, insbesondere ein Gleichstrommotor, verwendet eine elektrische Leistung $P_{el}$ und wandelt diese in eine mechanische Leistung $P_{mech}$ um. Es tritt eine Verlustleistung auf, die sich unter normalen Umständen aus der Differenz der elektrischen Leistung des Motors und der mechanischen Leistung (Arbeitsleistung) ergibt. Die Arbeitsleistung ist die Leistung, die beim Pipettieren eines gewünschten Volumens zur Durchführung der dafür unter normalen Umständen anfallenden mechanischen/hydraulischen Arbeit aufgewandt wird. Ein geeigneter Gleichstrommotor wird beispielsweise angeboten von der C.I.Takiron Corporation, Osaka, Japan, insbesondere als ein Motor des Typs "DC Coreless motor A12series", z.B. das Modell A12B-24-S.

Die Arbeitsleistung des Motors ist typischer Weise proportional zu dem an der Motorwelle anliegenden Drehmoment M multipliziert mit der Drehzahl n (Anzahl der Umdrehungen pro Zeiteinheit). Die Verlustleistung des Motors beinhaltet normale Reibungsverluste, die als Teil der zu erbringenden mechanischen Arbeitsleistung angesehen werden können. Die Verlustleistung beinhaltet zudem Wärmeverluste $P_W$ durch den elektrischen Widerstand R der Motorwicklungen. Diese Wärmeleistung kann als $P_W = R * I^2$ angegeben werden. Die vom Motor alleine zu erbringende Leistung ist somit $P_{el} = P_{mech} + P_W$. Treibt der Motor das Kolbenelement in der Kolbenkammer beim Pipettieren an, insbesondere über ein mechanisches Getriebe, so fallen weitere mechanische Reibungsverluste und die hydraulische Leistung beim Ansaugen/Abgeben des Fluids an. Im Fall einer Luftpolsterpipette wird beim Bewegen des Kolbens in proximaler Richtung, also von der Pipettenspitze weg, das Luftpolster zwischen Kolbenelement und fluider Probe expandiert, beim Abgeben (über die gravitationsbedingte Abgabegeschwindigkeit hinaus) komprimiert. Bei einem Direktverdränger ist das Fluid im Wesentlichen die flüssige Probe, die in einen Dispenserbehälter eingesaugt bzw. daraus abgegeben wird.

Der unter normalen Umständen übliche zeitliche Verlauf des Motorstroms $I_{mot}(t; P_{arb})$ beim Erbringen der Arbeitsleistung $P_{arb}$ des Pipettierens eines gewünschten Volumens V mit vorgegebener Pipettier-Geschwindigkeit $v_{pip}$ kann als bekannt vorausgesetzt werden, da sich diese Informationen durch werkseitige Referenzmessungen oder im Betrieb der Pipettiervorrichtung vorgenommene Referenzmessungen ermitteln lassen und in einer Datenspeichereinrichtung der Pipettiervorrichtung speichern lassen. Dieser vorbekannte Verlauf $I_{ref} = I_{mot}(t; v_{pip}; V)$ kann als Referenzverlauf bzw. in Form von Referenzdaten gespeichert sein. Der zeitliche Verlauf kann aus mehreren Wertepaaren $(I_{mot};t)$ bestehen oder kann aus einem Wert $I_{mot}$ bestehen, der zu einem definierten Zeitpunkt $t_0$ beim Pipettieren erfasst wurde.

Der Motorstrom $I_{mot}(t; P_{arb})$ hängt im realen Betrieb von verschiedenen weiteren Zustandsvariablen der Pipettiervorrichtung ab. Abweichungen des zeitlichen Verlaufs des Motorstroms bei einer vordefinierten Belastung zur Erbringung der entsprechenden Arbeitsleistung können als Maß für eine Leistungsänderung, insbesondere Leistungseinbuße, der Pipettiervorrichtung herangezogen werden. Bestimmte Fehlerzustände der Pipettiervorrichtung führen zu einer erhöhten Leistungsaufnahme über den Motor. Indem man als Referenzdaten zuvor bestimmte, insbesondere belastungsabhängige, Stromwerte heranzieht, kann durch eine vergleichende Auswertung der Messsdaten und der Referenzdaten eine Entscheidung darüber getroffen werden, ob ein Fehlerzustand der Pipettiervorrichtung vorliegt oder nicht.

Mögliche Fehlerzustände beruhen insbesondere auf Undichtigkeiten oder Verschmutzungen in der Ansaugmechanik, insbesondere Undichtigkeiten und Verschmutzungen im System Kolbenelement-Kolbenkammer-Ansaugkanal, Verschmutzungen im Antriebssystem, einschließlich des Elektromotors, dessen Welle und einem optionalen Getriebe, mögliche grobe Schrittfehler des Elektromotors, und/oder eine starke Abnutzung bzw. Verschleiß eines oder mehrerer, in der Ansaugmechanik enthaltener Bestandteile. Derartige Fehlerzustände können sich im Betrieb der Pipettiervorrichtung plötzlich ergeben und zu Problemen beim Pipettieren führen. Wünschenswert ist deshalb insbesondere eine einfach durchzuführende, vorzugsweise systematische oder zumindest vom Benutzer initiierte Beobachtung bzw. Prüfung der Pipettiervorrichtung hinsichtlich solcher Fehlerzustände.

Vorzugsweise ist vorgesehen, den Schritt a) vor Durchführung eines (regulären), vom Benutzer im Betrieb der Pipettiervorrichtung gestarteten Pipettiervorgangs durchzuführen. In diesem Fall wird Schritt a) insbesondere während einer ausschließlich der Erkennung mindestens eines Leistungszustandes dienenden Bewegung des Kolbenelements ausgeführt. Das bedeutet, dass diese Bewegung nicht der Durchführung eines -regulären- Pipettiervorgangs dient und dass während der Funktionsprüfung insbesondere keine Laborprobe pipettiert wird. Alternativ ist vorzugsweise vorgesehen, den Schritt a) während eines (regulären), vom Benutzer im Betrieb der Pipettiervorrichtung gestarteten Pipettiervorgangs durchzuführen, bei dem insbesondere eine Laborprobe pipettiert wird.

In jeweils bevorzugten Ausführungsformen der Erfindung wird die Funktionsprüfung vor, nach, oder während des regulären Betriebs der Pipettiervorrichtung durchgeführt. Um die Funktionsprüfung während der Durchführung eines -regulären- Pipettiervorgangs durchzuführen, wird ein solcher regulärer Pipettiervorgang als vordefinierte Belastung angesehen. In einem Pipettiervorgang wird eine flüssige Probe mit einem vom Benutzer gewählten Volumen mit einer vorgegebenen oder vom Benutzer eingestellten Pipettiergeschwindigkeit pipettiert. Dabei werden vorzugsweise solche, vom Benutzer gewählten Pipettiervorgänge herangezogen, deren Volumina und Pipettiergeschwindigkeiten auch den verfügbaren Referenzdaten zugrunde liegen. Dadurch kann ein genauer Vergleich des gemessenen Motorstroms - und somit der verrichteten Arbeitsleistung - mit unter diesen Bedingungen gültigen Referenzwerten, also idealen Werten, durchgeführt werden. Dies erfolgt insbesondere im Schritt b) des Verfahrens.

Vorzugsweise ist vorgesehen, den Schritt a) während eines (regulären), vom Benutzer im Betrieb der Pipettiervorrichtung gestarteten Pipettiervorgangs durchzuführen, und zwar zu Beginn des Pipettiervorgangs, insbesondere innerhalb von Millisekunden ab Start des Pipettiervorgangs, insbesondere innerhalb der Anzahl von N Millisekunden des Pipettiervorgangs, N vorzugsweise ausgewählt aus dem Bereich 100 bis 1000, 100 bis 2000 oder 100 bis 4000. Dadurch kann ein Fehlerzustand frühzeitig erkannt werden.

Ein Messvorgang, der in Schritt a) vorgesehen ist, kann insbesondere vorsehen, dass während der Bewegung des Kolbenelements eine Anzahl von N Messwerten der Messgröße erfasst werden, die z.B. in zeitlich äquidistanten Schritten, oder in äquidistanten Abständen der Motorumdrehungen bzw. in äquidistanten Abständen der Position des Kolbenelements ermittelt werden können. Die zum Vergleich herangezogenen Referenzdaten weisen ebenfalls vorzugsweise N Stromwerte auf. Weicht die Anzahl der Stromwerte im Messdatensatz der Messgröße von der Anzahl der Stromwerte in den Referenzdaten ab, kann eine Interpolation oder Extrapolation erfolgen.

Während der Kolbenbewegung wird ein Unterdruck in der Kolbenkammer erzeugt, durch den ein Fluid angesaugt wird. Das Produkt aus Druck p und Volumen V ist im Fall von Luft gemäß dem Boyle-Marriotte-Gesetz idealerweise konstant (p*V=konstant), so dass der Druckanstieg im Idealfall indirekt proportional zum expandierten Volumen bzw. dem Verfahrweg des Kolbenelements ist. Der dabei gemessene Motorstromverlauf ist im Wesentlichen proportional dem Druckverlauf in der Kolbenkammer. Analoges gilt für den Fall der Erzeugung eines Überdrucks in der Kolbenkammer zum Abgeben einer fluiden Probe.

Es können auch die Zeitpunkte während der Kolbenbewegung ermittelt werden, zu denen vorbestimmte Stromwerte anliegen. Beispielsweise kann mindestens ein Zeitpunkt -in Abstand von einem Zeitpunkt der Kolbenbewegung in Schritt a) - ermittelt werden, zu dem mindestens ein vorbestimmter Wert der Messgröße anliegt.

In einer bevorzugten Weiterbildung werden zur Bestimmung geeigneter Referenzdaten für einen Pipettiervorgang zumindest erste Referenzdaten und zweite Referenzdaten verwendet. Durch eine Datenoperation, insbesondere eine Interpolation oder Extrapolation, können aus den ersten und zweiten Referenzdaten dritte Referenzdaten ermittelt werden. Sind in der Pipettiervorrichtung beispielsweise erste Referenzdaten $I_{ref1}$ für ein bei Normalgeschwindigkeit zu pipettierendes Volumen V1 und zweite Referenzdaten $I_{ref2}$ für ein bei Normalgeschwindigkeit zu pipettierendes Volumen V2 verfügbar, und liegt das vom Benutzer gewählte Pipettiervolumen V3 zwischen V1 und V2, also V1 < V3 < V2, dann kann eine Interpolationsfunktion verwendet werden, um die dritten Referenzdaten $I_{ref3}$ zu bestimmen, z.B. eine lineare Interpolation, gemäß der z.B.

$$I_{ref1} = (V3\text{-}V1)/(V2\text{-}V1)^*(I_{ref1} + I_{ref2}).$$

In einer weiteren bevorzugten Ausführungsform der Erfindung wird die Funktionsprüfung außerhalb des regulären Betriebs der Pipettiervorrichtung durchgeführt. In dieser bevorzugten Ausführungsform wird die Funktionsprüfung vorzugsweise während eines dedizierten Funktionsprüfungsprogramms durchgeführt, bei dem also kein vom Benutzer gestarteter regulärer Pipettiervorgang durchgeführt wird. In dieser bevorzugten Ausführungsform der Erfindung wird die Funktionsprüfung besonders bevorzugt zu einem Zeitpunkt vor der Durchführung eines Pipettiervorgangs der Pipettiervorrichtung durchgeführt. Dieser Zeitpunkt kann insbesondere vom Benutzer definierbar sein, indem die Funktionsprüfung vom Benutzer durch Aktivierung mittels der Benutzerschnittstelleneinrichtung der Pipettiervorrichtung gestartet wird. Dieser Zeitpunkt kann insbesondere aber in einigen Ausführungsformen der Erfindung auch von der Steuereinrichtung bestimmt sein. In dieser bevorzugten Ausführungsform wird die Funktionsprüfung vorzugsweise während eines dedizierten Funktionsprüfungsprogramms durchgeführt, bei dem also kein vom Benutzer gestarteter regulärer Pipettiervorgang durchgeführt wird. Dieses Funktionsprüfungsprogramm wird insbesondere vor dem Pipettiervorgang durchgeführt.

Vorzugsweise ist die Pipettiervorrichtung dazu eingerichtet, mindestens ein Funktionsprüfungsprogramm auszuführen. In dem Funktionsprüfungsprogramm wird vorzugsweise ein erfindungsgemäßes Verfahren realisiert. Vorzugsweise weist die Pipettiervorrichtung eine Benutzerschnittstelleneinrichtung auf und ist vorzugsweise dazu eingerichtet, dass der Benutzer mindestens ein Funktionsprüfungsprogramm starten kann. Das Funktionsprüfungsprogramm kann dazu eingerichtet sein, dem Benutzer bei der Durchführung der Funktionsprüfung zu assistieren. Dazu kann insbesondere vorgesehen sein, dem Benutzer über die Benutzerschnittstelleneinrichtung der Piepttiervorrichtung Anweisungen auszugeben, die insbesondere beinhalten können, eine Widerstandseinrichtung, insbesondere ein Verschlusselement, an der Pipettiervorrichtung zu befestigen oder zu aktivieren.

Das Funktionsprüfungsprogramm erzeugt vorzugsweise automatisch eine vordefinierte Bewegung des Kolbenelements. Diese vordefinierte Bewegung ist vorzugsweise dazu eingerichtet, mindestens ein vorbestimmtes Zielvolumen mit mindestens einer vorbestimmten Pipettiergeschwindigkeit anzusaugen (oder abzugeben). Es kann genau ein Zielvolumen mit einer Pipettiergeschwindigkeit pipettiert werden oder mehrere Volumen können abschnittsweise mit derselben Pipettiergeschwindigkeit oder mehreren unterschiedlichen Pipettiergeschwindigkeiten pipettiert werden. "Pipettieren des Zielvolumens" bedeutet in diesem Fall insbesondere, dass das Kolbenelement soweit aus der Ausgangslage bewegt wird, wie dies unter normalen Umständen zu einem Pipettieren des gewünschten Zielvolumens führen würde. Ist der Ansaugkanal beispielswesie mit einem Verschlusselement verschlossen, so wird kein Volumen angesaugt sondern nur eine entsprechende Druckänderung in der Kolbenkammer bewirkt, die durch die Motorleistung $U_{mot} * I_{mot}$ erbracht wird. Das Funktionsprüfungsprogramm kann aber auch an einer realen flüssigen Referenzprobe durchgeführt werden.

Alternativ ist die vordefinierte Bewegung vorzugsweise dazu eingerichtet, ein vorbestimmtes Zielvolumen in einer vorbestimmten Zeit anzusaugen (oder abzugeben). Alternativ ist diese vordefinierte Bewegung vorzugsweise dazu eingerichtet, mindestens einen vorbestimmten Wert der Messgröße zu erreichen und dabei mindestens einen der folgenden Werte zu messen und zu speichern: Zeitspanne vom Start der Kolbenbewegung bis zum Erreichen des mindestens einen Wertes; Endvolumen bzw. Kolbenelementposition beim Erreichen des mindestens einen Wertes; Anzahl der Motorumdrehungen bis zum Erreichen des mindestens einen Wertes.

Ist der Ansaugkanal mit einer Widerstandseinrichtung versehen, die den Widerstand beim Pipettieren des Fluids in vorbestimmter Weise erhöht, so wird bei der Kolbenbewegung eine vorbestimmte physikalische Arbeit verrichtet und während des Funktionsprüfungsprogramms eine vorbestimmte Leistung angefordert, die sich in einer vorbestimmten Erhöhung des Drucks in der Kolbenkammer und/oder in einer dazu in vorbestimmter Weise abhängigen Beziehung zum Motorstrom äußert. Diese Erwartungswerte sind insbesondere experimentell vorbestimmt und der Pipettiervorrichtung als Referenzdaten bekannt. Durch Messung des mindestens einen Wertes der Messgröße in Schritt a) kann eine effiziente Funktionsprüfung durchgeführt werden, insbesondere wenn die Pipettiervorrichtung mit der Widerstandseinrichtung versehen ist.

Die Widerstandseinrichtung ist vorzugsweise ein separates Teil, das insbesondere am Ansaugkanal der Pipettiervorrichtung anbringbar ist, um der Fluidströmung beim Pipettieren einen vordefinierten Widerstand entgegensetzen kann, insbesondere einen praktisch unendlich hohen Widerstand, wenn der Ansaugkanal durch ein Verschlusselement vollständig gasdicht verschlossen wird.

Vorzugsweise ist die Widerstandseinrichtung als Verschlusselement realisiert, welches der Fluidströmung beim Pipettieren einen praktisch unendlich hohen Widerstand entgegensetzt, wenn der Ansaugkanal durch ein Verschlusselement vollständig gasdicht verschlossen wird. In diesem Fall wird die in der Kolbenkammer und im Ansaugkanal enthaltene Luft expandiert, wenn das Kolbenelement zurückgefahren wird, bzw. komprimiert, wenn das Kolbenelement heruntergefahren wird. Auf diese Weise können sehr effizient geeignete Belastungssituationen der Pipettiervorrichtung erzeugt werden, in denen eine Funktionsprüfung zuverlässig durchführbar ist.

Das Verschlusselement kann eine Verschlusskappe sein, die insbesondere wie eine reguläre Pipettenspitze oder Dispenserspritze auf einen Verbindungsabschnitt, insbesondere einen Arbeitskonus, der Pipettiervorrichtung anbringbar bzw. aufsteckbar ist. Die Verschlusskappe kann insbesondere ein Pipettierbehälter, z.B. eine Pipettenspitze oder Dispenserspritze sein, deren Durchlasskanal, insbesondere deren Auslassöffnung, verschlossen ist. Die Verschlusskappe kann insbesondere wie ein Pipettierbehälter, z.B. eine handelsübliche Pipettenspitze oder Dispenserspritze, geformt sein, deren Durchlasskanal, insbesondere deren Auslassöffnung, verschlossen ist. Der Durchlasskanal wird aus einem Körper des Pipettierbehälters gebildet, der an seinen beiden Enden geöffnet ist. Der Körper weist eine im Wesentlichen zylindermantelförmige Form mit konisch und/oder zylindrisch geformten Enden auf, wobei das eine Ende die Eingriffsöffnung für den Arbeitskonus der Pipette aufweist und das andere Ende die Auslassöffnung aufweist. Der Ansaugkanal der Pipettiervorrichtung endet insbesondere in dem äußeren Ende des Verbindungsabschnitts, bzw. des Arbeitskonus. Die Verschlusskappe liegt dabei in Verschlussposition gasdicht abschließend am Verbindungsabschnitt bzw. Arbeitskonus an. Dies wird insbesondere durch einen elastomeren Dichtungsring erreicht, der den Verbindungsabschnitt bzw. Arbeitskonus in einer vorbestimmten Höhe umringen kann. Letzteres ist bei Luftpolsterpipetten eine bevorzugte Gestaltung, um Pipettenspitzen gasdicht mit dem Ansaugkanal zu verbinden.

Eine Ausgestaltung als einfache Verschlusskappe ist eine effiziente Lösung. Die Verschlusskappe kann ein Polymer aufweisen oder aus einem Polymer gefertigt sein, insbesondere durch ein Gußverfahren, z.B. ein Spritzgussverfahren. Die Verschlusskappe kann auch aus einem Metall gefertigt sein oder Metall aufweisen, insbesondere Stahl oder Aluminium.

Beim Aufstecken des Verschlusselementes kann sich in der Kolbenkammer eine unerwünschte und die Messergebnisse ändernde Druckerhöhung ergeben, wenn das Verschlusselement ab dem Moment des gasdichten Verbindens mit dem Ansaugkanal bzw. Verbindungsabschnitt (Arbeitskonus) weiter aufgeschoben wird. Deshalb sind Ausführungsformen des Verschlusselements möglich und bevorzugt, die eine Öffnung mit definiertem Öffnungsquerschnitt aufweisen, durch die sich ein eventuell durch das Aufstecken erzeugter Druckanstieg in der Kolbenkammer durch den Druckausgleich mit dem Umgebungsdruck wieder zurückbilden kann, bevor das Funktionsprüfungsprogramm gestartet wird. Ein solches Verschlusselement mit definierter Öffnung kann insbesondere eine herkömmliche Pipettenspitze bzw. Dispenserspritze sein. Bevorzugt ist, dass bei Verwendung eines Verschlusselements der Ansaugkanal gasdicht verschlossen ist, bevor das Funktionsprüfungsprogramm gestartet wird. Insbesondere ist bevorzugt, dass der Ansaugkanal gasdicht verschlossen ist, wenn das Verschlusselement in seiner Endposition am Verbindungsabschnitt bzw. Arbeitskonus aufsitzt.

Alternativ kann das Verschlusselement ein Ventil aufweisen, beispielsweise ein Rückschlagventil, oder eine verschließbare Öffnung, so dass in der Verschlussposition ein Druckausgleich manuell oder gesteuert von der Pipettiervorrichtung möglich ist. Der Verbindungsabschnitt kann ein Ventil aufweisen, mit dem der Ansaugkanal in einer oder in beiden Richtungen schließbar sein kann, bzw. dessen Öffnungsquerschnitt in vordefinierter Weise variiert werden kann. Das Ventil kann manuell steuerbar sein oder kann von der Steuereinrichtung elektrisch steuerbar sein.

Vorzugsweise ist die Widerstandseinrichtung, insbesondere das Verschlusselement, in die Pipettiervorrichtung integriert oder mit der Pipettiervorrichtung verbunden. Vorzugsweise ist das Verschlusselement als bewegliches Teil der Pipettiervorrichtung vorgesehen, dass manuell oder elektrisch gesteuert bewegbar ist, um eine Verschlussposition herzustellen, in der das Verschlusselement den Ansaugkanal mit einem vorbestimmten Strömungswiderstand versieht, insbesondere den Strömungskanal verschließt. Das Verschlusselement kann beispielsweise ein Bauteil sein, das in den Ansaugkanal einschiebbar ist, insbesondere längs oder quer einschiebbar ist, um diesen zu verschließen. Das Verschlusselement kann beispielsweise ein Riegel, eine Blende oder eine Klappe sein.

Die Pipettiervorrichtung weist vorzugsweise einen Verbindungsabschnitt auf, in den der Ansaugkanal mündet. Der Verbindungsabschnitt ist vorzugsweise der Arbeitskonus der Pipettiervorrichtung. Vorzugsweise weist der Verbindungsabschnitt ein bewegliches Verschlusselement auf, das zwischen einer ersten Position und einer zweiten Position bewegbar ist, insbesondere durch Translation und/oder Rotation bewegbar ist. Das Verschlusselement und der Verbindungsabschnitt sind vorzugsweise so ausgebildet, dass der Ansaugkanal in der ersten Position geöffnet ist, insbesondere vollständig, und in der zweiten Position verschlossen ist, insbesondere vollständig, insbesondere gasdicht verschlossen ist. Das bewegliche Verschlusselement kann einen Teil des Arbeitskonus bilden, insbesondere die Spitze des Arbeitskonus, welche die äußere Form eines Kegelstumpfes aufweisen kann. Das Verschlusselement kann um die virtuelle Achse der vorzugsweise linearen Bewegung des Kolbenelements zwischen der ersten und zweiten Position rotierbar mit dem Arbeitskonus verbunden sein.

Ein bewegliches Verschlusselement kann manuell verstellbar eingerichtet sein. Zusätzlich oder alternativ kann ein bewegliches Verschlusselement apparativ verstellbar eingerichtet sein, insbesondere durch eine Getriebeeinrichtung und/oder gesteuert von der Steuereinrichtung der Pipettiervorrichtung. Vorzugsweise weist die Pipettiervorrichtung eine Aktuatoreinrichtung auf, mit der das bewegliche Verschlusselement apparativ verstellbar ist. Wenn das bewegliche Verschlusselement am Verbindungsabschnitt bzw. Arbeitskonus angeordnet ist, kann ein manuell angetriebenes Aktuatorelement, z.B. ein Druckknopf, oder ein maschinell angetriebenes Aktuatorelement der Aktuatoreinrichtung, z.B. ein motorgetriebenes Bauteil, in einer Distanz zum Verbindungsabschnitt an der Pipettiervorrichtung angeordnet sein, insbesondere in oder an einem entlang einer Längsachse beabstandet angeordneten Gehäuseabschnitt der Pipettiervorrichtung. Die Aktuatoreinrichtung kann dann ein Distanzelement aufweisen, mittels dem die Aktuierung des Aktuatorelements über die genannte Distanz zum beweglichen Verschlusselement übertragen wird.

Die Aktuatoreinrichtung bzw. das Aktuatorelement und/oder das Distanzelement zum Aktuieren eines beweglichen Verschlusselements können Bestandteil(e) einer Abwurfeinrichtung zum Abwerfen von Pipettenspitzen sein. Solche Abwurfeinrichtungen weisen ein entlang einer Längsachse der Pipettiervorrichtung auslenkbares Bauteil, insbesondere eine Abwurfhülse auf, das insbesondere als Distanzelement verwendbar ist, wenn es zum Koppeln der Abwurfbewegung mit der Bewegung des beweglichen Verschlusselements eingerichtet ist. Somit kann die Verschlussposition des Verschlusselements durch ein weiteres Bauteil der Pipettiervorrichtung einstellbar sein, insbesondere durch eine Einstellung der Position des Verschlusselements durch eine Abwurfeinrichtung zum Abwerfen von Pipettenspitzen. Diese kann auch elektrisch von der Steuereinrichtung steuerbar sein, so dass die Einstellung der Verschlussposition des Verschlusselements auch automatisch, d.h. ohne einen Benutzereingriff, erfolgen kann. Vorzugsweise ist die Pipettiervorrichtung dazu eingerichtet, das Funktionsprüfungsprogramm nach dem Starten durch den Benutzer oder durch die Steuereinrichtung automatisch durchzuführen.

Ebenfalls möglich und bevorzugt ist, dass der Benutzer mindestens eine Maßnahme an der Pipettiervorrichtung manuell durchführen muss, damit das Funktionsprüfungsprogramm vollständig ablaufen kann. Vorzugsweise beinhaltet diese Maßnahme, dass der Benutzer die Pipettiervorrichtung mit der Widerstandseinrichtung versieht, mittels der der Fluidströmung im Ansaugkanal beim Pipettieren (Ansaugen oder Abgeben) ein Widerstand entgegengesetzt wird. Diese Widerstandseinrichtung kann insbesondere ein Verschlusselement sein, dass vom Benutzer auf den Arbeitskonus aufsteckt, in den der Ansaugkanal endet, um den Widerstand für die Fluidströmung in vorbestimmter Weise zu erhöhen oder den Ansaugkanal vollständig abdichtend zu verschließen.

Das Funktionsprüfungsprogramm ist vorzugsweise dazu eingerichtet, mittels einer optischen und/oder akustischen Ausgabeeinrichtung (Display, LEDs, Lautsprecher) Informationen für den Benutzer in Abhängigkeit vom Verlauf des Funktionsprüfungsprogramms auszugeben. Auf diese Weise kann insbesondere ein Software-Wizard realisiert werden, der den Benutzer durch das Funktionsprüfungsprogramm führt und zur Durchführung eventueller Maßnahmen auffordert, falls dies erforderlich ist.

Der Motorstrom $I_{mot}(t; P_{arb})$ hängt im realen Betrieb von verschiedenen Zustandsvariablen der Pipettiervorrichtung ab. Solche Zustände werden, insofern sie berechenbar oder abschätzbar sind, in bevorzugten Ausführungsformen der vorliegenden Erfindung als Teil der verfügbaren Referenzdaten, also Referenzwerte und/oder Referenzkurven, berücksichtigt.

Zum Beispiel kann ein Wirkungsgrad definiert werden, insbesondere als Verhältnis von abgegebener mechanischer Leistung zu aufgenommener elektrischer Leistung des Motors.

Die Erfindung betriff ferner, in einer weiteren bevorzugten Ausführungsform ein Verfahren zur Erkennung mindestens eines Leistungszustandes der dem Pipettieren dienenden Ansaugmechanik einer Pipettiervorrichtung, insbesondere einer Pipette oder einer Repetierpipette, wobei die Ansaugmechanik einen elektrisch angetriebenen Motor, eine Kolbenkammer und ein darin beweglich angeordnetes und mittels des Motors angetriebenes Kolbenelement aufweist, durch dessen Bewegung das Ansaugen eines Fluids unter Ausbilden einer Fluidströmung durch einen offenen Ansaugkanal der Kolbenkammer bewirkbar ist, wobei die Pipettiervorrichtung eine Widerstandseinrichtung aufweist, mittels der während der Durchführung des Verfahrens der mechanische, insbesondere der hydraulische Widerstand der Ansaugmechanik gegenüber der vom Motor geleisteten physikalischen Arbeit erhöht wird, und wobei die Pipettiervorrichtung einen den Druck in der Kolbenkammer messenden Drucksensor aufweist und dazu eingerichtet ist, den vom Drucksensor gemessenen Druck als Messgröße zur Charakterisierung der physikalischen Arbeit zu erfassen, die durch das elektrisch angetriebene Bewegen dieses Kolbenelements mittels der Ansaugmechanik geleistet wird, und

wobei das Verfahren die folgenden, durch eine datenverarbeitende Steuereinrichtung der Pipettiervorrichtung ausführbaren Schritte aufweist:

a) Erfassen mindestens eines Wertes dieser Messgröße in Abhängigkeit von einer definierten Bewegung des Kolbenelements;

b) Vergleichen der mindestens einen Messgröße mit mindestens einem Referenzwert.

c) Optional: Speichern dieses mindestens einen Wertes dieser Messgröße in einer Datenspeichereinrichtung der Pipettiervorrichtung.

Mithilfe der Widerstandseinrichtung, insbesondere einem Verschlusselement, wird der Ansaugkanal der Pipettiervorrichtung in vorbestimmter Weise blockiert bzw. vollständig verschlossen. Das eingeschlossene Totvolumen der Pipettiervorrichtung in der oberen Position des Kolbenelements ist vorzugsweise bekannt. Durch Verfahren des Kolbenelements wird die in der Kolbenkammer enthaltene Luft komprimiert bzw. expandiert, was zu einer Druckänderung im Inneren des verschlossenen Kolbenelement-Kolbenkammer-Bauraums führt. Es gilt insbesondere p*V=konst. (Boyle-Marriotte-Gesetz für ideales Gas). Daher muss die Druckänderung für die Luft näherungsweise indirekt proportional zum verdrängten Volumen bzw. Verfahrweg des Kolbenelements sein.

Eine Messung des Druckanstiegs (bzw. Druckabfall bei entgegengesetztem Verfahren des Kolbenelements) im Vergleich zu einem theoretisch errechneten oder durch Experimente ermittelten Verlauf lässt Rückschlüsse auf die Funktionsfähigkeit bzw. die Leistungsfähigkeit und/oder die Fehlerzustände der Pipettiervorrichtung zu.

Die Messung einer Druckdifferenz kann mithilfe eines zusätzlichen in der Pipettiervorrichtung verbauten Drucksensors erfolgen. Der zweite Drucksensor kann den Außendruck messen.

• Vorzugsweise ist die Pipettiervorrichtung für einen drahtlosen oder drahtgebundenen Datenaustausch mit einer externen Datenverarbeitungsvorrichtung eingerichtet, um Werte der Messgröße mit der externen Datenverarbeitungsvorrichtung auszutauschen. Dadurch kann einerseits eine Pipettiervorrichtung, insbesondere mehrere Pipettiervorrichtungen, zentral überwacht werden, um zum Beispiel eine Wartung zu veranlassen. Andererseits können Wertedaten durch Erfassung mehrerer Wertedaten insbesondere von mehreren Pipettiervorrichtungen zentral, insbesondere statistisch, verarbeitet werden, insbesondere gemittelt werden, um verbesserte Informationen zu erhalten.

Die Messeinrichtung zur Messung der Messgröße ist vorzugsweise in die elektrische Motoreinrichtung integriert. Eine elektrische Motoreinrichtung ist vorzugsweise dazu ausgebildet, einen Betriebsparameter der Motoreinrichtung zu erfassen und verfügbar zu machen, so dass dieser Betriebsparameter insbesondere von der elektrischen Steuereinrichtung ausgelesen werden kann. Der Betriebsparameter ist vorzugsweise der Motorstrom der Motoreinrichtung. Die Motoreinrichtung kann einen Teil der elektrischen Steuereinrichtung der Pipettiervorrichtung aufweisen. Insbesondere kann die Steuereinrichtung der Motoreinrichtung diese Messeinrichtung aufweisen. Die Motoreinrichtung kann insbesondere programmgesteuert arbeiten, kann softwaregesteuert ausgebildet sein und/oder kann eine in die Steuereinrichtung der Motoreinrichtung integrierte Regeleinrichtung aufweisen. Die elektrische Steuereinrichtung ist insbesondere dazu ausgebildet, die Motoreinrichtung zu steuern, und/oder ist insbesondere dazu ausgebildet, die Motoreinrichtung mittels einer Regeleinrichtung der Steuereinrichtung geregelt zu steuern, wobei der mindestens eine Messwert insbesondere eine Messgröße dieser Regelung sein kann, und der mindestens eine Geschwindigkeitswert eine Stellgröße dieser Regelung sein kann. Die Regeleinrichtung ist vorzugsweise als Proportional-Differential-Regler (PD-Regler) ausgebildet.

Eine elektrische Motoreinrichtung der Pipettiervorrichtung kann einen elektrisch angetriebenen Schrittmotor aufweisen, insbesonder kann der elektrische Motor ein Schrittmotors sein. Es ist auch möglich, dass die Motoreinrichtung einen Linearmotor aufweist. Vorzugsweise weist die elektrische Motoreinrichtung einen Gleichstrommotor auf, der vorzugsweise von einer konstanten Gleichspannung angetrieben wird, die insbesondere bei 4V bis 40 V, insbesondere bei 5 V liegt. Der Gleichstrommotor wird vorzugsweise schrittweise angetrieben. Dies kann dadurch erfolgen, dass er von der bzw. einer elektrischen Steuereinrichtung durch eine Rechteckspannung angesteuert wird, deren Tastverhältnis insbesondere die Schrittdauer definiert. Die Rechteckspannung kann insbesondere zwischen 0V und 15V verlaufen. Ein Schritt kann durch eine Periode der periodischen Rechteckspannung definiert sein.

Der Gleichstrommotor wird vorzugsweise mittels Pulsweitenmodulation (PWM) angesteuert. Über den Tastgrad des Steuersignals wird die Drehzahl und damit die Geschwindigkeit gesteuert. Die Steuereinrichtung ist vorzugsweise dazu eingerichtet, den Gleichstrommotor mittels eines Steuersignals zu steuern, das gepulst ist, insbesondere um durch Pulsweitenmodulation, insbesondere durch Einstellung des Tastgrades, die Drehzahl festzulegen.

Vorzugsweise weist die Pipettiervorrichtung einen Umdrehungszahlsensor und/oder einen Drehwinkelsensor auf, mittels dem die Pipettiervorrichtung dazu eingerichtet ist, die Zahl der Umdrehungen bzw. den Drehwinkel einer Rotoreinrichtung des Elektromotors oder eines von der Rotoreinrichtung angetriebenen Elements, z.B. eines Getriebeelements, zu erfassen. Vorzugsweise ist die Pipettiervorrichtung, insbesondere deren Steuereinrichtung, dazu eingerichtet, den Kolbenhub über die Anzahl der mittels des Umdrehungszahlsensor gemessenen Umdrehungen und mittels des Drehwinkels der Rotoreinrichtung oder eines von der Rotoreinrichtung angetriebenen Elements, z.B. eines Getriebeelements, einzustellen. Die Ansaugmechanik ist insbesondere so gestaltet, dass zum Anhalten der Rotoreinrichtung des Elektromotors die Selbsthemmung des Elektromotors und/oder der an ihn gekoppelten Getbriebeeinrichtung verwendet wird.

Es ist möglich, dass die Pipettiervorrichtung eine Getriebeeinrichtung aufweist, die insbesondere zwischen Motoreinrichtung und Kolbenelement angeordnet ist, um die von der Motoreinrichtung erzeugte Bewegung auf das Kolbenelement zu übertragen, insbesondere um eine Drehzahl zu übersetzen oder zu untersetzen. Die elektrische Motoreinrichtung kann einen Rotor aufweisen. Der Rotor kann eine Spindel der Getriebeeinrichtung rotieren, die wiederum die (Translations-)bewegung eines Kolbenelements der Pipettiervorrichtung bewirken kann.

Die Ansaugmechanik weist einen elektrisch angetriebenen Motor, eine Kolbenkammer und ein darin beweglich angeordnetes und mittels des Motors angetriebenes Kolbenelement auf, durch dessen Bewegung das Ansaugen eines Fluids unter Ausbilden einer Fluidströmung durch einen offenen Ansaugkanal der Kolbenkammer bewirkbar ist. Analog ist im Fall der Probenabgabe unter Druck auch vorgesehen, mittels der Ansaugmechanik einen Druck in der Kolbenkammer zu erzeugen und die Fluidströmung im Ansaugkanal nach außen zu reichten, um die Probe z.B. aus einer Pipettenspitze auszustoßen.

Die elektrische Steuereinrichtung, die zur Datenverarbeitung ausgebildet ist, kann elektrische Schaltkreise aufweisen, insbesondere integrierte Schaltkreise, und/oder kann einen Mikroprozessor aufweisen und/oder eine CPU, Datenspeicher und/oder Programmspeicher. Die Steuereinrichtung kann zum Verarbeiten bzw. Ausführen eines Programmcodes ausgebildet sein. Der Programmcode kann dazu ausgebildet sein, den mindestens einen Messwert der Messgröße in Schritt a) zu bestimmen und kann insbesondere dazu ausgebildet sein, die bevorzugten Ausgestaltungen dieser Funktion der Pipettiervorrichtung zu implementieren, die im Rahmen der Erfindung beschrieben sind.

Die elektrische Steuereinrichtung ist insbesondere dazu ausgebildet, einen Pipettiervorgang gemäß mindestens einem, insbesondere gemäß mehrerer, Betriebsparameter zu steuern, insbesondere automatisch oder halbautomatisch zu steuern. Automatisch zu steuern bedeutet, dass zur Durchführung des Pipettiervorgangs im Wesentlichen nur ein Startsignal vom Benutzer über eine Benutzerschnittstelleneinrichtung der Pipettiervorrichtung eingegeben wird, und/oder dass insbesondere der Aufnahmevorgang mindestens einer fluiden Probe in mindestens ein mit der Pipettiervorrichtung verbundenes Transportbehältnis erfolgen kann bzw. erfolgt, ohne dass eine Benutzereingabe erforderlich ist und/oder dass insbesondere der Abgabevorgang mindestens einer fluiden Probe aus mindestens einem, mit der Pipettiervorrichtung verbundenen Transportbehältnis erfolgen kann bzw. erfolgt, ohne dass eine Benutzereingabe erforderlich ist. Bei einer halbautomatischen Steuerung ist zur Durchführung des Aufnahme- bzw. Abgabevorgangs neben der Eingabe eines Startsignals mindestens eine weitere Benutzereingabe erforderlich, z.B. eine Eingabe, mit der der Benutzer mindestens einen zu verwendenden Betriebsparameter nach Eingabe des Startsignals und vor Durchführung des Pipettiervorgangs bestätigt. Beide, die automatische und die halbautomatische Steuerung des Pipettiervorgangs sehen vor, die Bewegung des bewegbaren Teils beim Pipettiervorgang durch den Antrieb der Motoreinrichtung durchzuführen.

Die elektrische Pipettiervorrichtung kann dazu ausgebildet sein, in einem Betriebsmodus oder mehreren Betriebsmodi betrieben zu werden. Ein Betriebsmodus kann vorsehen, dass ein Satz mit einem oder mehreren Betriebsparametern der Pipettiervorrichtung, die einen Pipettiervorgang der Pipettiervorrichtung beeinflussen oder steuern, automatisch abgefragt, eingestellt und/oder angewandt wird. Die Entscheidung, wie der Wert eines Betriebsparameters lauten soll, wird bei der Benutzung der Pipettiervorrichtung in der Regel vom Benutzer jeweils getroffen und der Betriebsparameter entsprechend festgelegt. Mindestens ein Betriebsparameter des Betriebsparametersatzes, insbesondere dieser mindestens eine Geschwindigkeitswert eines Geschwindigkeitsparameters, wird von der elektrischen Steuereinrichtung abgefragt und insbesondere vom Benutzer durch eine Eingabe mittels der Benutzerschnittstelleneinrichtung festgelegt. Ein Betriebsmodus kann vorsehen, dass das mindestens eine Funktionsprüfungsprogramm zur Bestimmung eines Leistungszustands der Pipettiervorrichtung durchgeführt wird. Ein Funktionsprüfungsprogramm kann somit durch einen Satz von Betriebsparametern definiert werden, die in der Datenspeichereinrichtung gespeichert sein können.

Ein Betriebsmodus kann beispielsweise das "Dispensieren" (DIS) einer Probe betreffen, das mittels der Betriebsparameter "Volumen der Einzelprobe", "Anzahl der Abgabeschritte", "Geschwindigkeit bei der Aufnahme der Probe(n)", "Geschwindigkeit bei der Abgabe der Probe(n)" definiert sein kann. Ein Betriebsmodus kann ferner das "Automatische Dispensieren" (ADS) einer Probe sein, das "Pipettieren" (Pip) einer Probe, das "Pipettieren mit anschließendem Mischen" (P/Mix) einer Probe, die "Mehrfachaufnahme" einer Probe, auch bezeichnet als "Umgekehrtes Dispensieren" oder als "ASP" für Aspirating, das "Diluting" (Dil) einer Probe, auch bezeichnet als "Verdünnung", das "Sequentielle Dispensieren" (SeqD) von Proben, das "Sequentielle Pipettieren" (SeqP) von Proben, oder das "Reverse Pipettieren" (rPip) von Proben.

Ein Pipettiervorgang einer programmierbaren Pipettiervorrichtung kann, insbesondere während Schritt a) bzw. während eines Funktionsprüfungsprogramms, typischer Weise vorsehen, dass gemäß eines Pipettierprogramms eine bestimmte Probenmenge aus einem Startbehälter in einen mit der Pipettiervorrichtung verbundenen Pipettierbehälter aufgenommen wird und insbesondere anschließend wieder in einen Zielbehälter abgegeben wird, insbesondere dosiert abgegeben wird. Je nach Anwendung bzw. Funktionsprüfung können die Aufnahme und oder die Abgabe der Probe(n) bestimmten Ordnungsmustern, insbesondere Reihenfolgen, von Aufnahme- und Abgabeschritten folgen, können zeitabhängig erfolgen und können zeitlich abgestimmt sein. Ein Pipettiervorgang lässt sich vorzugsweise durch einen Satz aus Betriebsparametern steuern, mit denen die genannten Vorgänge in der gewünschten Weise beeinflussbar sind.

Betriebsparameter zum Steuern eines Pipettiervorgangs betreffen vorzugsweise die Einstellung des zu pipettierenden Volumens, beim Schritt des Ansaugens der Probe in einen mit der Pipettiervorrichtung verbundenen Pipettierbehälter oder beim Schritt des Abgebens der Probe aus diesem Pipettierbehälter, gegebenenfalls die Reihenfolge und Wiederholungen dieser Schritte, und gegebenenfalls zeitliche Parameter bei der zeitlichen Verteilung dieser Vorgänge, insbesondere auch die zeitliche Veränderung solcher Vorgänge, insbesondere die Geschwindigkeit anhand dieses Geschwindigkeitswertes und/oder Beschleunigung des Ansaugens oder Abgebens der Probe. Es ist erfindungsgemäß vorgesehen, dass während des Schrittes a) des erfindungsgemäßen Verfahrens mindestens ein Betriebsparameter, insbesondere ein Geschwindigkeitswert eines Geschwindigkeitsparameters, von der Steuereinrichtung verwendet wird. Der mindestens eine Wert des Betriebsparameters kann in einer Datenspeichereinrichtung gespeichert sein, auf die die Steuereinrichtung zur Durchführung des erfindungsgemäßen Verfahrens zugreifen kann.

Der Pipettiervorgang, insbesondere während Schritt a) bzw. während eines Funktionsprüfungsprogramms, ist vorzugsweise durch den Betriebsparametersatz eindeutig festgelegt. Dieser Betriebsparametersatz wird vorzugsweise zumindest teilweise und vorzugsweise vollständig vom Benutzer ausgewählt und/oder eingegeben, insbesondere über die Bedieneinrichtung der Pipettiervorrichtung. Durch einen Betriebsparametersatz wird vorzugsweise ein Steuerprogramm zur Durchführung des gewünschten Pipettiervorgangs gesteuert. Das Steuerprogramm kann jeweils in Form von elektrischen Schaltkreisen der Steuereinrichtung ausgebildet sein, und/oder durch einen ausführbaren Programmcode ausgebildet sein, der geeignet ist zum Steuern der Steuereinrichtung, die vorzugsweise programmcode-steuerbar ist und vorzugsweise programmierbar ist.

Die Pipettiervorrichtung ist vorzugsweise dazu ausgebildet, die vom Benutzer eingegebenen Parameterwerte, insbesondere die für die Bestimmung einer Funktionsprüfung eingegebenen Betriebsparameter, automatisch zu überprüfen und mit einem erlaubten Bereich des jeweiligen Betriebsparameters zu vergleichen. Liegt der vom Benutzer eingegebene Parameterwert außerhalb des zulässigen Bereichs, wird vorzugsweise die Eingabe entweder nicht akzeptiert oder auf eine Default-Wert gesetzt, der z.B. der Minimalwert oder der Maximalwert oder der zuletzt zulässig eingegebene Wert sein kann.

Ein Betriebszustand der Pipettiervorrichtung bezeichnet einen Bereitschaftszustand der Pipettiervorrichtung, in dem die zur Durchführung eines Pipettiervorgangs erforderlichen Betriebsparameter einen Wert aufweisen, so dass der Pipettiervorgang anhand dieser Werte durchgeführt werden kann. Ein Betriebszustand kann ein Standby-Zustand mit minimiertem Energieverbrauch der Pipettiervorrichtung sein. Diese ist vorzugsweise dazu ausgebildet, dass ein automatisch durchführbares Funktionsprüfungsprogramm bei Vorliegen eines Standby-Modus durchgeführt wird, insbesondere in vorgegebenen Zeitabständen und/oder zu vorgegebenen Zeitpunkten, z.B. nachts. Dazu kann die Pipettiervorrichtung insbesondere eine Echtzeituhr aufweisen. Es kann auch mittels eines Beschleunigungssensors der Pipettiervorrichtung automatisch eine Phase der Nicht-Nutzung der Pipettiervorrichtung durch einen Benutzer ermittelt werden, in der dann automatisch ein Funktionsprüfungsprogramm durchgeführt wird.

Vorzugsweise ist die elektrische Steuereinrichtung dazu ausgebildet, den mindestens einen Messwert der Messgröße automatisch auszuwerten, insbesondere mit Referenzdaten zu vergleichen (Schritt b). Es ist möglich, dass die Funktion der Durchführung eines Funktionsprüfungsprogramm vom Benutzer aktivierbar bzw. deaktivierbar ist, indem die Pipettiervorrichtung entsprechende Eingabe- und/oder Auswahlmöglichkeit bietet. Es ist also diese Funktion insbesondere in zumindest einem Betriebszustand der Pipettiervorrichtung aktiviert, während es auch einen Betriebszustand geben kann, indem diese Funktion zwar in der Pipettiervorrichtung vorhanden ist, aber deaktiviert ist.

Alternativ oder ergänzend zu der Messeinrichtung wird insbesondere auch die Drehzahl des elektromotorischen Antriebs und/oder die Geschwindigkeit der Bewegung des bewegbaren Teils, insbesondere des Kolbens einer Pipette oder des Spritzenkolbens einer Dispenserspritze, mittels eines Sensors der Pipettiervorrichtung gemessen. Hierzu können entsprechend auch mehrere Sensoren vorgesehen sein.

Ein Leistungszustand ist ein Zustand der Pipettiervorrichtung, insbesondere der Ansaugmechanik. Er charakterisiert die Leistungsfähigkeit der Pipettiervorrichtung durch den Vergleich der Messgröße mit mindestens einem Referenzwert bzw. Referenzdaten. Ein als "normal" charakterisierter Leistungszustand entspricht dabei einem Referenz-Leistungszustand, in dem die Pipettiervorrichtung zur Erbringung der herstellerseitig vorgesehenen Leistungswerte befähigt ist. Die Bewertung, ob der Leistungszustand dem Referenz-Leistungszustand entspricht -bzw. ob die Pipettiervorrichtung gemäß der gemessenen Messgröße die Herstellernorm erfüllt-, erfolgt unter Berücksichtigung eines Toleranzbereichs, in dem die Abweichung vom Referenz-Leistungszustand noch als normal angesehen wird. Dieser Toleranzbereich ist insbesondere ein Toleranzbereich der Messgröße, also ein bestimmter, als normal akzeptierter Bereich der Stromaufnahme, bzw. des Kolbenkammerdrucks. Der Leistungszustand kann zudem vom Referenz-Leistungszustand abweichen. In diesem Fall liegt der Leistungszustand, insbesondere die Messgröße, außerhalb des als normal angesehenen Wertebereichs.

Vorzugsweise weist die Pipettiervorrichtung eine Benutzerschnittstelleneinrichtung auf. Diese kann ein berührungsempfindliches Display aufweisen, bezeichnet als Touchscreen, und/oder ein Display, und/oder mindestens einen Bedienknopf, -wippe, - hebel, und/oder -drehrad. Die Benutzerschnittstelleneinrichtung kann ferner einen Lautsprecher aufweisen, insbesondere, um in Abhängigkeit vom gemessenen mindesten einen Messwert ein akustisches Signal auszugeben, mit dem der Benutzer insbesondere über den Messwert, und/oder über eine Abweichung des mindestens einen Wertes der Messgröße von mindestens einem Referenzwert und/oder den automatischen Abbruch des Pipettiervorgangs informiert wird bzw. gewarnt wird.

Vorzugsweise weist die Pipettiervorrichtung eine Benutzerschnittstelleneinrichtung, einen Zeitgeber und eine Datenspeichereinrichtung zum Speichern digitaler Daten auf, wobei die Steuereinrichtung vorzugsweise eine Recheneinrichtung, insbesondere eine CPU bzw. einen Mikroprozessor, aufweist und dazu ausgebildet ist, ein erfindungsgemäßes Verfahren bzw. ein Funktionsprüfungsprogramm auszuführen.

Die Datenspeichereinrichtung ist vorzugsweise ein von der Steuereinrichtung ansprechbarer, insbesondere durch Software definierter, Speicherteilbereich in einem größeren Speicherbereich. Der Speicherteilbereich kann eine Datei sein. Der Speicherbereich kann ein Datenspeicher sein. Ein Speicherbereich kann ein durch Software verwalteter nicht-physikalischer Speicherraum sein, der physikalisch in einem Hardwarespeicher angeordnet ist. Die Datenspeichereinrichtung kann einen Hardwarespeicher aufweisen. Die Datenspeichereinrichtung, bzw. der Hardwarespeicher ist vorzugsweise ein permanenter, also nicht-flüchtiger, Datenspeicher, vorzugsweise ein FLASH-Speicher. Der Hardwarespeicher ist vorzugsweise dazu ausgebildet, vorzugsweise mindestens 100000, vorzugsweise mindestens 150000 oder vorzugsweise mindestens 300000 Schreibzyklen oder Löschzyklen durchführen zu können. Der Hardwarespeicher kann zudem auch ein flüchtiger Datenspeicher sein, z.B. ein DRAM- oder SRAM-Speicher.

Vorzugsweise ist die Pipettiervorrichtung als eine Dosiervorrichtung eines Systems zum Titrieren von Flüssigkeiten ausgebildet, wie es insbesondere in einem der Ansprüche 1 bis 30 der europäischen Patentanmeldung Nr. 06027038.6, veröffentlicht als EP 1 825 915 A2 der Anmelderin, beschrieben ist, bzw. in einer bevorzugten Ausgestaltung des Systems wie in dieser Patentanmeldung beschrieben, deren diesbezügliche Offenbarung durch Bezugnahme in die vorliegende Anmeldung einbezogen ist. Eine solche Pipettiervorrichtung weist insbesondere eine Leseeinrichtung zum Lesen des Kennzeichens der mittels einer weiteren Halteeinrichtung der Pipettiervorrichtung gehaltenen lösbar verbundenen Pipettierbehälter, insbesondere einer Spritze oder Spitze auf. Ein solcher Pipettierbehälter, insbesondere die Spritze oder Spitze, weist mindestens ein Kennzeichen auf, das z.B. eine Information über den jeweiligen Typ und/oder Zustand des Pipetttierbehälters enthält. Die Information betrifft z.B. das Nennvolumen und/oder die Bauart (z.B. Gestalt und/oder Abmessungen) und/oder das Material und/oder den Reinheitsgrad und/oder den Hersteller und/oder das Herstellungsdatum und/oder erfolgte Benutzungen des Pipetttierbehälters. Die Dosiervorrichtung weist eine Leseeinrichtung auf, die dazu ausgestaltet ist, das Kennzeichnen der Spritze oder Spitze zu lesen, wenn diese mittels der weiteren Halteeinrichtung an der Dosiervorrichtung gehalten ist. Die Steuereinrichtung steuert die Bewegung des bewegbaren Teils, insbesondere des Kolbens, in Abhängigkeit von dem von der Leseeinrichtung gelesenen Kennzeichens.

Die erfindungsgemäße Pipettiervorrichtung kann eine Einkanal- oder eine Mehrkanalpipette sein. Sie kann insbesondere ferner eine Pipette oder eine Repetierpipette (Dispenser) sein. Die Pipettiervorrichtung ist für den handgehaltenen Betrieb ausgebildet, ist also vorzugsweise von einem Benutzer einhändig bedienbar.

Die Erfindung betrifft ferner eine Pipettiervorrichtung, insbesondere einer Pipette oder einer Repetierpipette, zum Pipettieren von fluiden Proben in einem Labor, aufweisend

eine Ansaugmechanik, die einen elektrisch angetriebenen Motor, eine Kolbenkammer und ein darin beweglich angeordnetes und mittels des Motors angetriebenes Kolbenelement aufweist, durch dessen Bewegung das Ansaugen eines Fluids unter Ausbilden einer Fluidströmung durch einen offenen Ansaugkanal der Kolbenkammer bewirkbar ist,

eine datenverarbeitende Steuereinrichtung, die mindestens eine Datenspeichereinrichtung aufweist,

eine Messeinrichtung zur Erfassung des vom Motor aufgenommenen Motorstroms als Messgröße zur Charakterisierung der physikalischen Arbeit, die durch das elektrisch angetriebene Bewegen dieses Kolbenelements mittels der Ansaugmechanik geleistet wird, und

wobei die Steuereinrichtung zur Erkennung eines Leistungszustandes der Pipettiervorrichtung dazu eingerichtet ist,

a) mindestens einen Wert dieser Messgröße in Abhängigkeit von einer definierten Bewegung des Kolbenelements zu erfassen,
b) den mindestens einen Wert dieser Messgröße in der Datenspeichereinrichtung zu speichern.
c) Optional: den mindestens einen Wert der Messgröße mit mindestens einem Referenzwert zu vergleichen.

Die Erfindung betrifft ferner eine Pipettiervorrichtung, insbesondere einer Pipette oder einer Repetierpipette, zum Pipettieren von fluiden Proben in einem Labor, aufweisend

eine Ansaugmechanik, die einen elektrisch angetriebenen Motor, eine Kolbenkammer und ein darin beweglich angeordnetes und mittels des Motors angetriebenes Kolbenelement aufweist, durch dessen Bewegung das Ansaugen eines Fluids unter Ausbilden einer Fluidströmung durch einen offenen Ansaugkanal der Kolbenkammer bewirkbar ist,

eine datenverarbeitende Steuereinrichtung, die mindestens eine Datenspeichereinrichtung aufweist,

eine einen Drucksensor aufweisende Messeinrichtung zur Erfassung des in der Kolbenkammer bewirkten Drucks als Messgröße zur Charakterisierung der physikalischen Arbeit, die durch das elektrisch angetriebene Bewegen dieses Kolbenelements mittels der Ansaugmechanik geleistet wird,

wobei die Pipettiervorrichtung mit einer Widerstandseinrichtung versehen ist, mittels der während der Durchführung des Verfahrens der mechanische, insbesondere der hydraulische Widerstand der Ansaugmechanik gegenüber der vom Motor geleisteten physikalischen Arbeit erhöht wird,

wobei die Steuereinrichtung zur Erkennung eines Leistungszustandes der Pipettiervorrichtung dazu eingerichtet ist,

a) mindestens einen Wert dieser Messgröße in Abhängigkeit von einer definierten Bewegung des Kolbenelements zu erfassen,
b) den mindestens einen Wert der Messgröße mit mindestens einem Referenzwert zu vergleichen.
c) Optional: den mindestens einen Wert dieser Messgröße in der Datenspeichereinrichtung zu speichern.

Merkmale und bevorzugte Ausgestaltungen der erfindungsgemäßen Pipettiervorrichtung können der Beschreibung des erfindungsgemäßen Verfahrens und ihrer bevorzugten Ausgestaltungen entnommen werden.
Die Erfindung betrifft ferner einen Programmcode der von einer softwaresteuerbaren Pipettiervorrichtung, insbesondere Pipette oder Repetierpipette, ausführbar ist, und mit dem ein erfindungsgemäßes Verfahren in eine solche Pipettiervorrichtung implementierbar ist.
Diese softwaresteuerbare Pipettiervorrichtung wird durch Verwenden des Programmcodes, insbesondere durch Laden des Programmcodes in einen Programmcodespeicher dieser softwaregesteuerten Pipettiervorrichtung, dazu befähigt, das erfindungsgemäße Verfahren und gegebenenfalls eine seiner bevorzugten Ausgestaltungen durchzuführen. Somit betrifft die Erfindung auch einen Programmcode für eine softwaresteuerbare Pipettiervorrichtung, die durch Verwendung des erfindungsgemäßen Programmcodes zu einer erfindungsgemäßen Pipettiervorrichtung umgewandelt wird bzw. erweitert wird. Auf diese Weise lassen sich elektronische Pipettiervorrichtungen nachrüsten, um die erfindungsgemäßen Eigenschaften aufzuweisen. Die Erfindung betrifft insbesondere einen Datenträger, z.B. einen optischen Datenträger, z.B. eine CD, ein Flash-Speicher oder eine Festplatte, der diesen erfindungsgemäßen Programmcode enthält.
Weitere bevorzugte Ausgestaltungen des erfindungsgemäßen Pipettiervorrichtung und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Einzelne Merkmale dieser Beschreibung können zur Definition einer bevorzugten Ausgestaltung der Erfindung verwendet werden.
Es zeigen:

Fig. 1 a zeigt in perspektivischer Seitenansicht eine erfindungsgemäße Pipettiervorrichtung, die als elektronische Luftpolsterpipette ausgebildet ist und mit deren Arbeitskonus eine Pipettenspitze verbunden ist.

Fig. 1b zeigt in Seitenansicht eine als Repetierpipette ausgestaltete erfindungsgemäße Pipettiervorrichtung gemäß einer bevorzugten Ausführungsform, an der eine Dispenserspritze verbunden ist.

Fig. 2a zeigt eine erste bevorzugte Ausführungsform der erfindungsgemäßen Pipettiervorrichtung, bei der der Motorstrom als Messgröße zur Beurteilung des Leistungszustands der Ansaugmechanik herangezogen wird.

Fig. 2b zeigt eine zweite bevorzugte Ausführungsform der erfindungsgemäßen Pipettiervorrichtung mit Verschlusselement, bei der der Kolbenkammerdruck als Messgröße zur Beurteilung des Leistungszustands der Ansaugmechanik herangezogen wird.

Fig. 2c zeigt ein Verschlusselement, dass bei einer Funktionsprüfung eingesetzt werden kann.

Fig. 3a zeigt eine Reihe von Kolbenelementpositionen, die bei einer Messung eines Referenzverlaufs von Messwerten und bei einer Funktionsprüfung gemäß dem erfindungsgemäßen Verfahren verwendet werden können.

Fig. 3b zeigt eine Referenzwertkurve "+" mit Toleranzbereich und Messwerte "o" und "x" zweier möglicher, mittels dem erfindungsgemäßen Verfahren durchgeführter Funktionsprüfungen an Pipettiervorrichtungen aus Fig. 1a, 1b, 2a, 2b.

Fig. 4 zeigt schematisch den Ablauf des erfindungsgemäßen Verfahrens gemäß einem Ausführungsbeispiel.

Fig. 5a zeigt eine Reihe von Kolbenelementpositionen, die bei einer Messung eines Referenzverlaufs von Messwerten und bei einer anderen Funktionsprüfung gemäß dem erfindungsgemäßen Verfahren verwendet werden können.

Fig. 5b zeigt eine Referenzwertkurve "+" mit Toleranzbereich und Messwerte "o" und "x" zweier möglicher, mittels dem erfindungsgemäßen Verfahren durchgeführter Funktionsprüfungen an Pipettiervorrichtungen aus Fig. 1a, 1b, 2a, 2b.

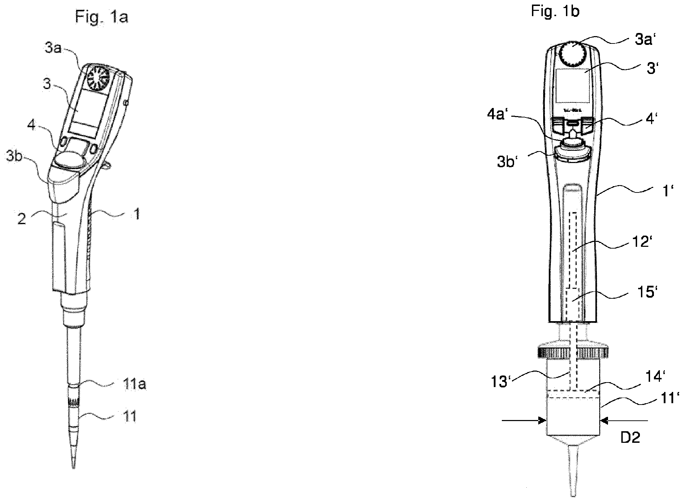

Fig. 1a zeigt in perspektivischer Seitenansicht eine erfindungsgemäße Pipettiervorrichtung 1, die als elektronische Luftpolsterpipette 1 ausgebildet ist und mit deren Arbeitskonus 11a eine Pipettenspitze 11 verbunden ist. Die Luftpolsterpipette weist einen integrierten Kolben (nicht sichtbar, da im Inneren des Gehäuses 2) auf, der im Inneren der Pipettenspitze ein Vakuum erzeugen kann, wenn das Kolbenelement in der Kolbenkammer durch den elektrischen Motor nach oben bewegt wird. Die zu pipettierende Probe wird so in die Pipettenspitze eingesaugt, durch Überdruck in der Kolbenkammer wird die Probe wieder aus der Pipettenspitze abgegeben. Typische maximale Fassungsvermögen solcher Luftpolsterpipetten liegen bei 100 Nanoliter bis 10 Milliliter.Die Luftpolsterpipette 1 weist eine Benutzerschnittstelleneinrichtung auf, insbesondere ein Wahlrad 3a, ein

Display 3, eine Bedienwippe 4. Mit dem Wahlrad 3a lassen sich Betriebsmodi der Pipettiervorrichtung einstellen. Einer dieser Betriebsmodi "Funktionsprüfung" dient der Durchführung des erfindungsgemäßen Verfahrens bzw. der Anwahl einer Displayseite zur Auswahl mindestens eines Verfahrens zur Funktionsprüfung, definiert durch ggf. einen oder mehrere Betriebsparameter. Mit dem Abwurfknopf 3b lässt sich die Pipettenspitze abwerfen. Die Luftpolsterpipette 1 weist ferner eine elektrische Steuereinrichtung und eine Messeinrichtung zur Messung der Messgröße (jeweils nicht sichtbar) auf.

Fig. 1b zeigt eine als Repetierpipette 1' ausgestaltete erfindungsgemäße Pipettiervorrichtung 1' gemäß einer bevorzugten Ausführungsform, an der eine Dispenserspritze 11' verbunden ist. Die Pipettiervorrichtung weist eine Benutzerschnittstelleneinrichtung auf, die ein Display 3' aufweist, das insbesondere dem Anzeigen der Werte von Betriebsparametern der Pipettiervorrichtung dient und insbesondere der Beschreibung der Betriebsparameter dient. Mittels eines Wahlrades 3a' wird der Betriebsmodus des Dispensers eingestellt, In einem Betriebsmodus ist jeweils ein bevorzugter automatisierter Dispensiervorgang mittels eines Satzes von Betriebsparametern definiert bzw. vom Benutzer durch Vorgabe oder Auswahl der Werte dieser Betriebspparameter definierbar. Die Benutzerschnittstelleneinrichtung weist ferner eine Bedienwippe 4' als Bedienelement auf, die einen oberen und einen unteren Schwenkbereich aufweist. Mit dieser Bedienwippe navigiert der Benutzer durch Auswahlmenüs der grafischen Benutzeroberfläche, mittels der die Steuereinrichtung mindestens einen Betriebsparameter abfrägt. Im Dispensiermodus der Pipettiervorrichtung erfolgt das Aufnehmen eines Flüssigkeitsvolumens mittels Ansaugen aus einem Ausgangsbehälter (nicht gezeigt) in den Vorratsbehälter der Dispenserspritze durch eine erste Betätigung des Auslösknopfs 4a', alle darauffolgenden Betätigungen des Auslösknopfs 4a' lösen jeweils einen Abgabeschritt aus. Die beim Ansaugen bzw. Abgeben der Probe verwendeten Betriebsparameter betreffen insbesondere das einzusaugende Probenvolumen und die dabei zu verwendende Aufnahmegeschwindigkeit (Volumen pro Zeit) oder - dazu äquivalent bei bekannter Behältergeometrie - die zum Einsaugen zu verwendende Zeitspanne. Diese Betriebsparameter, die bei der Definition von Pipettiervorgängen verwendet werden, können ähnlich auch zur Definition einer Funktionsprüfung verwendet werden. Die Behältergeometrie bzw. der Behältertyp kann insbesondere über eine Codierung im Transportbehälter automatisch von der Pipettiervorrichtung mittels einer vorzugsweise vorgesehenen Leseeinrichtung ausgelesen werden. Beim Bewegen der Probe mittels Dispenserspritze 11' wird das Direktverdrängerprinzip genutzt, wie eingangs beschrieben.

Der Kolben 13' mit Kolbenelement 14' der Dispenserspritze 11' weist einen nach außen exponierten Verbindungsansatz 15' auf, der mit einer Spindel 12' der Pipettiervorrichtung verbindbar -und von diesem wieder lösbar- ist. Der Auslöseknopf 4a' startet insbesondere einen Abgabevorgang, bei dem die im Transportbehälter 11' enthaltene flüssige Probe gemäß vorbestimmten Betriebsparametern abgegeben wird. Diese Betriebsparameter legen insbesondere die Anzahl der Abgabeschritte fest, das Abgabevolumen eines Abgabeschritts und die Abgabegeschwindigkeit (Volumen pro Zeit) bzw. einen dazu proportionalen Wert, die während eines Abgabeschrittes oder mehrerer oder jedes Abgabeschrittes eingehalten werden soll. Die Pipettiervorrichtung 1' ist insbesondere programmgesteuert, d.h. die verschiedenen Betriebsparametersätze, die jeweils einem Pipettierprogramm und damit einem bestimmten Betriebsmodus zugeordnet sind, können programmgesteuert festgelegt sein, so dass ein Benutzer zur Durchführung des gewünschten Pipettiervorgangs gegebenenfalls das gewünschte Pipettierprogramm auswählt und, falls gewünscht, mindestens einen Betriebsparameter einstellt.

Die Dispenserspritze 11' weist einen Vorratsbehälter mit größerem Durchmesser d2 auf und weist eine Öffnung mit kleinerem Durchmesser d1 auf, d1 < d2. Die kleine Öffnung d1 ist für den Großteil des Strömungswiderstands verantwortlich, der beim Pipettieren mittels der Dispenserspritze 11' entsteht. Der kleinere Durchmesser definiert somit einen vorgegebenen Widerstand, der beim Pipettieren eines bestimmten Volumens mit einer bestimmten Pipettiergeschwindigkeit ein im Normalfall den Referenzdaten entsprechende Motorleistung bzw. einen Referenzverlauf der Messgröße, insbesondere des Motorstroms, erfordert. Die Pipettiervorrichtung misst in Schritt a) die Werte für die Messgröße, vergleicht sie in Schritt b) mit den Referenzdaten und, optional, speichert sie in einem Schritt c) in einem nicht-flüchtigen Datenspeicher. Im Falle einer Abweichung, die generell durch betragsmäßiges Überschreiten eines Toleranzbereich des Verlaufs der Messgröße oder mindestens einen Toleranzwert für die mindestens eine Messgröße charakterisiert ist, wird der Benutzer informiert und/oder das Ergebnis in der Datenspeichereinrichtung gespeichert.

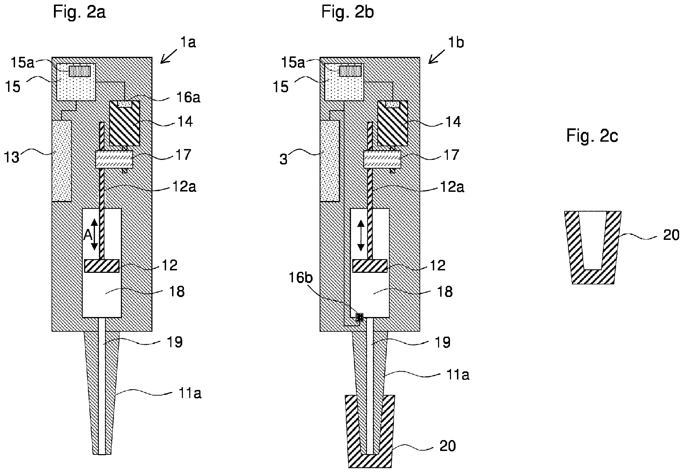

Wie in Fig. 2a gezeigt ist, weist die Pipettiervorrichtung 1 in einer ersten bevorzugten Ausführungsform unter anderem folgende Komponenten auf: eine Benutzerschnittstelle 13 in Verbindung mit der elektrischen datenverarbeitenden Steuereinrichtung 15, mit der ein Pipettiervorgang elektrisch steuerbar ist, ein Kolbenelement 12 an einer Kolbenstange 12a, durch dessen Bewegung in der Kolbenkammer 18 die fluide Probe durch den Ansaugkanal 19 pipettierbar ist, der in einer Öffnung in der Fußseite des Arbeitskonus 11a mündet, eine von der Steuereinrichtung 15 elektrisch ansteuerbare Motoreinrichtung 14, mit der die Bewegung des Kolbenelements über das Getriebe 17 antreibbar ist.

Eine einen Drehzahlmesser 16a aufweisende Messeinrichtung ist vorliegend ein Bestandteil der elektronischen Regeleinrichtung der Motoreinrichtung 14, hier ein Gleichstrommotor 14, und kann als Bestandteil der elektrischen Steuereinrichtung 15 gesehen werden, mit der die Messeinrichtung 16a signalverbunden ist. Die Messeinrichtung 16a beinhaltet einen Stromsensor.

Der Motor dreht in kleinsten Inkrementen schrittweise eine Rotoreinrichtung (nicht gezeigt), die wiederum schrittweise eine Spindel des Getriebes 17 bewegt, deren Drehung die schrittweise translatorische Bewegung des Kolbens 12a entlang der Richtung A (Fig 1c) bewirkt, der auf diese Weise die Aufnahme und Abgabe der Probe in den Transportbehälter bzw. aus diesem heraus bewirkt.

Die Pipettiervorrichtung 1b in Fig. 2b ist ähnlich der Pipettiervorrichtung 1a in Fig. 2a aufgebaut, erkennbar an denselben Bezugzeichen. Die in die Pipettiervorrichtung integrierte Messeinrichtung 16b weist einen Drucksensor auf, der den Druck in der Kolbenkammer als Messgröße misst. Ein Verschlusselement 20 ist am unteren Ende des Arbeitskonus 11a angeordnet. Das Verschlusselement 20 ist hier ein auf den Arbeitskonus aufsteckbarer Verschlussstopfen zum vollständigen Verschließen des Ansaugkanals 19 in der Verschlussposition. Das Verschlusselement 20 dient als Widerstandseinrichtung bei einer Funktionsprüfung, um dem Fluidstrom, hier der Luftstrom der Luftpolsterpipette 1b, einen Widerstand entgegenzusetzen. Der Ansaugkanal ist vollständig blockiert. Ein Verschlusselement 20 kann auch bei der Durchführung einer Funktionsprüfung an der Pipettiervorrichtung 1, 1' und 1a verwendet werden.

Die Pipettiervorrichtung 1, 1', 1a, 1b dient dem Pipettieren von fluiden Proben in einem Labor. Sie weist auf eine Ansaugmechanik, die einen elektrisch angetriebenen Motor (14), eine Kolbenkammer (18) und ein darin beweglich angeordnetes und mittels des Motors angetriebenes Kolbenelement (12) aufweist, durch dessen Bewegung das Ansaugen eines Fluids unter Ausbilden einer Fluidströmung durch einen offenen Ansaugkanal (19) der Kolbenkammer bewirkbar ist. Die Pipettiervorrichtung weist zudem die datenverarbeitende Steuereinrichtung 15 auf, die mindestens eine Datenspeichereinrichtung 15a aufweist. Sie enthält eine Messeinrichtung 16a zur Erfassung des vom Motor 14 aufgenommenen Motorstroms, oder einen Drucksensor 16b zur Erfassung des Kammerdrucks, als Messgröße zur Charakterisierung der physikalischen Arbeit, die durch das elektrisch angetriebene Bewegen dieses Kolbenelements 12 mittels der Ansaugmechanik geleistet wird.

Die Steuereinrichtung 15 ist zur Erkennung eines Leistungszustandes der Pipettiervorrichtung 1, 1', 1a, 1 b eingerichtet, insbesondere:

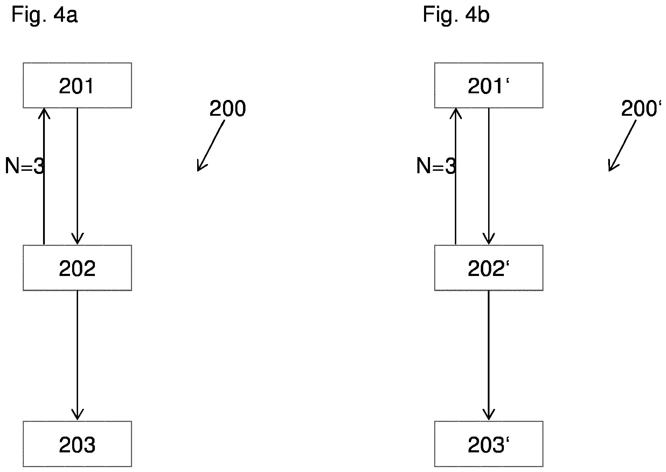

a) mindestens einen Wert dieser Messgröße in Abhängigkeit von einer definierten Bewegung des Kolbenelements 12 zu erfassen, (Schritt 201 in Fig. 4)
b) den mindestens einen Wert der Messgröße mit mindestens einem Referenzwert zu vergleichen. (Schritt 202 in Fig. 4)
c) den mindestens einen Wert dieser Messgröße in der Datenspeichereinrichtung 15a zu speichern. (Schritt 203 in Fig. 4)

Dabei kann Schritt c) (203) -alternativ oder zusätzlich auch vor dem Schritt b) (202) erfolgen.

Der mindestens eine Referenzwert ist in der Datenspeichereinrichtung 15a gespeichert und somit verfügbar. Der Referenzwert wird im Fertigungsprozess der Pipettiervorrichtung vom Hersteller ermittelt und eingespeichert. Zusätzlich kann der Referenzwert vom Service neu eingespeichert werden, wenn Komponenten (z.B. Motor, Spindel) im Falle einer Wartung der Piepttiervorrichtung getauscht werden. Die in Schritt a) genannte definierte Bewegung ist hier eine Ansaugbewegung des Kolbenelements 12 (Aufwärtsbewegung des Kolbenelements 12) zum Ansaugen der Probe oder eine Ausstoßbewegung zur Abgabe der Probe. Diese Bewegung ist durch ein Zielvolumen definiert, das einer bestimmten idealen Endposition des Kolbenelements 12 entspricht. Das Kolbenelement 12 wird also startend von der Ausgangssituation, in der in der Kolbenkammer der Atmosphärendruck anliegt, bis zur volumenbestimmenden Endposition bewegt, in der in der Kolbenkammer ein Unterdruck anliegt. Die Bewegung ist ferner durch die Pipettiergeschwindigkeit definiert. Der mindestens eine Referenzwert enthält mindestens einen Stromwert, insbesondere eine Reihe von Stromwerten, die zuvor, z.B. herstellerseitig, experimentell mit dieser Pipette oder wenigstens einer baugleichen Pipette ermittelt wurden, und zwar bei genau der in Schritt a) eingesetzten Bewegung mit dem genannten Zielvolumen und der festgelegten Pipettiergeschwindigkeit. Die Stromwerte des Referenzverlaufs $I_{ref}(t)$ wurden während der Bewegung ermittelt und sind im Wesentlichen proportional dem Druck in der Probenkammer unter Normalbedingungen.

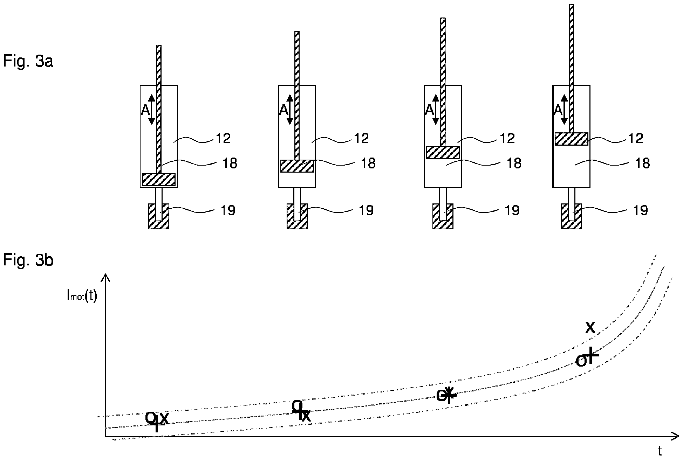

Fig. 3a zeigt verschiedene Kolbenstellungen der Pipettiervorrichtungen aus Fig. 2a und 2b beim Expandieren der Luft in der Kolbenkammer 18 durch Bewegen des Kolbens 12 mit festgelegter Geschwindigkeit nach oben bis zu einer festgelegten Endposition. Der Ansaugkanal ist mit dem Verschlusselement verschlossen. Zu den Kolbenstellungen in Fig. 3a ist in Fig. 3b ein Verlauf $I_{mot}(t)$ von Referenz-Messwerten illustriert, symbolisiert im Diagramm $I_{mot}(t)$ durch "+". Die mittlere Kurve im Diagramm kann einem Idealverlauf gemäß der Referenzwerte entsprechen, die obere und untere Kurve legen einen Toleranzbereich fest, der einen fehlerfreien Zustandsbereich der Pipette markiert. Die Funktionsprüfung erfolgt analog und führt zu Messwerten, die im Diagramm durch "x" und "o" illustriert sind. Zur Durchführung des Verfahrens würde insbesondere der Vergleich eines einzigen Messwertes mit einem Referenzmesswert ausreichen, insbesondere der Wert beim Erreichen des Zielvolumens ganz rechts. Die Messreihe "x" zeigt einen Fehlerzustand an, da der gemessene Motorstrom bei dieser Kolbenstellung, bzw. zum Zeitpunkt des Erreichens der Endposition des Kolbens, außerhalb des Toleranzbereichs liegt. Durch das in Fig. 3a, 3b gezeigte Verfahren der Funktionsprüfung kann eine Undichtigkeit der Ansaugmechanik ermittelt werden. Es kann auch eine Verschmutzung oder ein Verschleiß der Ansaugmechanik detektiert werden, was sich insbesondere in einem erhöhten Wert des gemessenen Motorstroms äußern kann.

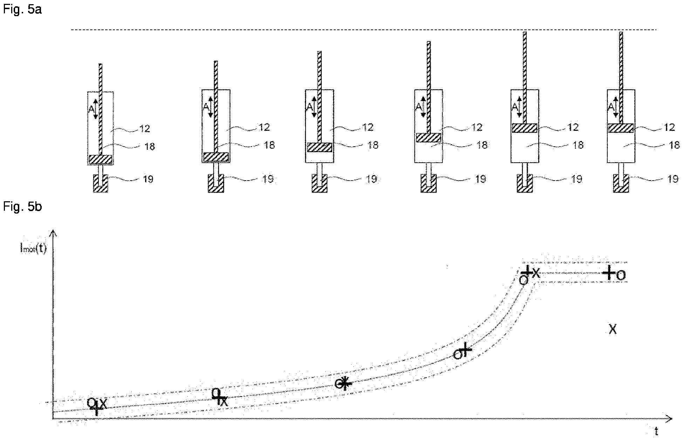

Ähnlich der Fig. 3a zeigt die Fig. 5a verschiedene Kolbenstellungen der Pipettiervorrichtungen aus Fig. 2a und 2b beim Expandieren der Luft in der Kolbenkammer 18 durch Bewegen des Kolbens 12 mit festgelegter Geschwindigkeit nach oben bis zu einer festgelegten Endposition. Auch hier ist der Ansaugkanal mit dem Verschlusselement verschlossen. Zu den Kolbenstellungen in Fig. 5a ist in Fig. 5b ein Verlauf $I_{mot}(t)$ von Referenz-Messwerten illustriert, symbolisiert im Diagramm $I_{mot}(t)$ durch "+". Die mittlere Kurve im Diagramm kann einem Idealverlauf gemäß der Referenzwerte entsprechen, die obere und untere Kurve legen einen Toleranzbereich fest, der einen fehlerfreien Zustandsbereich der Pipette markiert. Die Funktionsprüfung erfolgt analog und führt zu Messwerten, die im Diagramm durch "x" und "o" illustriert sind. Im Unterschied zum Verfahren in Fig. 3a, 3b, wird in Fig. 5a, 5b -in einem zusätzlichen Verfahrensschritt- der Kolben für einen definierten Zeitraum in seiner am weitesten aus der Kolbenkammer ausgefahrenen Stellung, insbesondere bei Erreichen des maximalen Motorstroms, belassen und der Motor wird ausgeschaltet. Nach einer Verzögerungszeit von z.B. 50 ms bis 5s wird der Motor wieder angefahren, und die Messgröße "Motorstrom" erneut ermittelt. Wenn die Ansaugmechanik ordnungsgemäß arbeiten würde, insbesondere die Kolbenkammer abgedichtet wäre, würde der Motor wegen des sofortigen Erreichens des maximalen Motorstroms sofort wieder abschalten - der letzte Wert der Messgröße würde dem vorletzten Wert der Messgröße im Rahmen der Toleranz entsprechen, was sich als Plateaubereich der Messkurve darstellen würde. Im hier gezeigten Fall einer undichten Kolbenkammer liegt der gemessene Motorstrom aber außerhalb des Toleranzbereichs, was einen mangelhaten Leistungszustand der Pipettiervorrichtung darstellt. Die entsprechende Information wird dem Benutzer, insbesondere über eine Anzeige der Pipettiervorrichtung, ausgegeben und/oder die Messgröße gespeichert, zum Zweck der Dokumentation und/oder nachfolgenden Auswertung. Die Messreihe "x" zeigt auch hier einen Fehlerzustand an, da der gemessene Motorstrom zum Zeitpunkt des Erreichens der Endposition des Kolbens und nach der Wartezeit außerhalb des Toleranzbereichs liegt. Dadurch wird insbesondere eine Undichtigkeit in der Ansaugmechanik detektiert.

Fig. 4a zeigt schematisch den Ablauf des erfindungsgemäßen Verfahrens 200 gemäß einem Ausführungsbeispiel, an einer Pipettiervorrichtung, wobei die zur Erkennung mindestens eines Leistungszustandes der dem Pipettieren dienenden Ansaugmechanik einer Pipettiervorrichtung (1; 1'; 1a) herangezogene Messgröße der Motorstrom ist. Die Schritte a) und b) werden insgesamt viermal durchgeführt, um vier Messwerte (1+n=3 Wiederholungen) der Messgröße zu erfassen (201) und zu speichern (202). Abschließend wird durch einen Vergleich geprüft, ob die Messwerte in einem Toleranzbereich liegen (203). Das Verfahren wird vorzugsweise durchgeführt, wenn der Ansaugkanal 19 mit einem Verschlussstopfen versiegelt ist. Auf diese Weise kann effizient ein Belastungszustand der Pipettiervorrichtung herbeigeführt werden, der für eine Funktionsprüfung besonders geeignet ist.

Fig. 4b zeigt schematisch den Ablauf des erfindungsgemäßen Verfahrens 200' gemäß einem Ausführungsbeispiel, an einer Pipettiervorrichtung, wobei die zur Erkennung mindestens eines Leistungszustandes der dem Pipettieren dienenden Ansaugmechanik einer Pipettiervorrichtung (1, 1', 1a, 1b) herangezogene Messgröße der Kolbenkammerdruck ist. Das Verfahren läuft darüber hinaus analog zum Verfahren 200 in Fig. 4a ab.

## Patentansprüche

1. Verfahren (200) zur Erkennung mindestens eines Leistungszustandes der dem Pipettieren dienenden Ansaugmechanik einer Pipettiervorrichtung (1, 1', 1a, 1b), insbesondere einer Pipette oder einer Repetierpipette, wobei die Ansaugmechanik einen elektrisch angetriebenen Motor (14), eine Kolbenkammer (18) und ein darin beweglich angeordnetes und mittels des Motors angetriebenes Kolbenelement (12) aufweist, durch dessen Bewegung das Ansaugen eines Fluids unter Ausbilden einer Fluidströmung durch einen offenen Ansaugkanal (19) der Kolbenkammer bewirkbar ist, wobei die Pipettiervorrichtung dazu eingerichtet ist, den vom Motor aufgenommenen Motorstrom als Messgröße zur Charakterisierung der physikalischen Arbeit zu erfassen, die durch das elektrisch angetriebene Bewegen dieses Kolbenelements mittels der Ansaugmechanik geleistet wird, und wobei das Verfahren die folgenden, durch eine datenverarbeitende Steuereinrichtung (15) der Pipettiervorrichtung ausführbaren Schritte aufweist:

   a) Erfassen mindestens eines Wertes dieser Messgröße in Abhängigkeit von einer definierten Bewegung des Kolbenelements; (201)
   b) Vergleichen der mindestens einen Messgröße mit mindestens einem Referenzwert. (202)

2. Verfahren (200') zur Erkennung mindestens eines Leistungszustandes der dem Pipettieren dienenden Ansaugmechanik einer Pipettiervorrichtung (1, 1', 1a, 1b), insbesondere einer Pipette oder einer Repetierpipette, wobei die Ansaugmechanik einen elektrisch angetriebenen Motor (14), eine Kolbenkammer (18) und ein darin beweglich angeordnetes und mittels des Motors angetriebenes Kolbenelement (12) aufweist, durch dessen Bewegung das Ansaugen eines Fluids unter Ausbilden einer Fluidströmung durch einen offenen Ansaugkanal (19) der Kolbenkammer bewirkbar ist,

wobei die Pipettiervorrichtung eine Widerstandseinrichtung (20) aufweist, mittels der während der Durchführung des Verfahrens der mechanische, insbesondere der hydraulische Widerstand der Ansaugmechanik gegenüber der vom Motor geleisteten physikalischen Arbeit erhöht wird, und wobei die Pipettiervorrichtung einen den Druck in der Kolbenkammer messenden Drucksensor (16b) aufweist und dazu eingerichtet ist, den vom Drucksensor gemessenen Druck als Messgröße zur Charakterisierung der physikalischen Arbeit zu erfassen, die durch das elektrisch angetriebene Bewegen dieses Kolbenelements mittels der Ansaugmechanik geleistet wird, und wobei das Verfahren die folgenden, durch eine datenverarbeitende Steuereinrichtung der Pipettiervorrichtung ausführbaren Schritte aufweist:

   a) Erfassen mindestens eines Wertes dieser Messgröße in Abhängigkeit von einer definierten Bewegung des Kolbenelements; (201')
   b) Vergleichen der mindestens einen Messgröße mit mindestens einem Referenzwert. (202')

3. Verfahren nach Anspruch 1 oder 2, wobei Schritt a) zu einem Zeitpunkt vor einem Pipettiervorgang ausgeführt wird, der vom Benutzer gestartet und mit der Pipettiervorrichtung durchgeführt wird, insbesondere zeitlich unmittelbar vor dem Start dieses Pipettiervorgangs durchgeführt wird.

4. Verfahren nach Anspruch 1 oder 2, wobei Schritt a) während einer ausschließlich der Erkennung mindestens eines Leistungszustandes dienenden Bewegung des Kolbenelements ausgeführt wird.

5. Verfahren nach Anspruch 4, wobei Schritt a) automatisch, und gesteuert von der Steuereinrichtung der Pipettiervorrichtung, durch Ausführen eines Funktionsprüfungsprogramms durchgeführt wird.

6. Verfahren nach Anspruch 1, wobei die Pipettiervorrichtung mit einer Widerstandseinrichtung (20) versehen ist, mittels der während der Durchführung des Verfahrens der mechanische, insbesondere der hydraulische Widerstand der Ansaugmechanik gegenüber der vom Motor geleisteten physikalischen Arbeit erhöht wird.

7. Verfahren nach Anspruch 2 oder 6, wobei die Widerstandseinrichtung ein Verschlusselement (20) ist, mit dem der Ansaugkanal (19) zumindest teilweise blockiert wird oder vollständig verschlossen wird.

8. Verfahren nach Anspruch 7, wobei das Verschlusselement eine Verschlusskappe (20) ist.

9. Verfahren nach einem der vorgenanntenAnsprü-

che, bei dem während der Bewegung des Kolbenelements in Schritt a) eine Anzahl N von Werten der Messgröße gemessen werden und in einem Schritt c) gespeichert werden, wobei das Messen und Speichern insbesondere im Wechsel erfolgen.

10. Verfahren gemäß einem der vorherigen Ansprüche, wobei der Motor ein Gleichstrommotor (14) ist, der die Informationen über den aufgenommenen Motorstrom über einen elektrischen Kontakt zur Verfügung stellt.

11. Verfahren gemäß einem der Ansprüche 1 bis 10, aufweisend den Schritt:

> c) Speichern dieses mindestens einen Wertes dieser Messgröße in einer Datenspeichereinrichtung (15a) der Pipettiervorrichtung. (203)

12. Pipettiervorrichtung (1; 1'; 1a), insbesondere einer Pipette oder einer Repetierpipette, zum Pipettieren von fluiden Proben in einem Labor, aufweisend eine Ansaugmechanik, die einen elektrisch angetriebenen Motor (14), eine Kolbenkammer (18) und ein darin beweglich angeordnetes und mittels des Motors angetriebenes Kolbenelement (12) aufweist, durch dessen Bewegung das Ansaugen eines Fluids unter Ausbilden einer Fluidströmung durch einen offenen Ansaugkanal (19) der Kolbenkammer bewirkbar ist,
eine datenverarbeitende Steuereinrichtung (15), die mindestens eine Datenspeichereinrichtung (15a) aufweist,
eine Messeinrichtung (16a) zur Erfassung des vom Motor aufgenommenen Motorstroms als Messgröße zur Charakterisierung der physikalischen Arbeit, die durch das elektrisch angetriebene Bewegen dieses Kolbenelements mittels der Ansaugmechanik geleistet wird, und
wobei die Steuereinrichtung zur Erkennung eines Leistungszustandes der Pipettiervorrichtung dazu eingerichtet ist,

> a) mindestens einen Wert dieser Messgröße in Abhängigkeit von einer definierten Bewegung des Kolbenelements zu erfassen,
> b) den mindestens einen Wert der Messgröße mit mindestens einem Referenzwert zu vergleichen.
> c) Optional: den mindestens einen Wert dieser Messgröße in der Datenspeichereinrichtung zu speichern.

13. Pipettiervorrichtung gemäß Anspruch 12, die mit einer Widerstandseinrichtung (20) versehen ist, mittels der während der Durchführung des Verfahrens der mechanische, insbesondere der hydraulische Widerstand der Ansaugmechanik gegenüber der vom Motor geleisteten physikalischen Arbeit erhöht wird.

14. System aus einer Pipettiervorrichtung gemäß Anspruch 12 und einer Widerstandseinrichtung, mittels der während der Durchführung des Verfahrens der mechanische, insbesondere der hydraulische Widerstand der Ansaugmechanik gegenüber der vom Motor geleisteten physikalischen Arbeit erhöhbar ist.

15. Pipettiervorrichtung (1; 1'; 1b), insbesondere einer Pipette oder einer Repetierpipette, zum Pipettieren von fluiden Proben in einem Labor, aufweisend eine Ansaugmechanik, die einen elektrisch angetriebenen Motor (14), eine Kolbenkammer (18) und ein darin beweglich angeordnetes und mittels des Motors angetriebenes Kolbenelement (12) aufweist, durch dessen Bewegung das Ansaugen eines Fluids unter Ausbilden einer Fluidströmung durch einen offenen Ansaugkanal (19) der Kolbenkammer bewirkbar ist,
eine datenverarbeitende Steuereinrichtung (15), die mindestens eine Datenspeichereinrichtung (15a) aufweist,
eine einen Drucksensor (16b) aufweisende Messeinrichtung zur Erfassung des in der Kolbenkammer bewirkten Drucks als Messgröße zur Charakterisierung der physikalischen Arbeit, die durch das elektrisch angetriebene Bewegen dieses Kolbenelements mittels der Ansaugmechanik geleistet wird,
wobei die Pipettiervorrichtung mit einer Widerstandseinrichtung (20) versehen ist, mittels der während der Durchführung des Verfahrens der mechanische, insbesondere der hydraulische Widerstand der Ansaugmechanik gegenüber der vom Motor geleisteten physikalischen Arbeit erhöht wird,
wobei die Steuereinrichtung zur Erkennung eines Leistungszustandes der Pipettiervorrichtung dazu eingerichtet ist,

> a) mindestens einen Wert dieser Messgröße in Abhängigkeit von einer definierten Bewegung des Kolbenelements zu erfassen,
> b) den mindestens einen Wert der Messgröße mit mindestens einem Referenzwert zu vergleichen.
> c) Optional: den mindestens einen Wert dieser Messgröße in der Datenspeichereinrichtung zu speichern.

16. Programmcode zur Implementierung des Verfahrens nach Anspruch 1 oder 2 in einer Pipettiervorrichtung, der von einer datenverarbeitenden Steuereinrichtung der Pipettiervorrichtung so ausführbar ist, dass diese eine Pipettiervorrichtung mit den Merkmalen gemäß einem der Ansprüche 12 bis 15 ist oder dass von dieser das Verfahren nach Anspruch 1 oder 2 durchführbar ist.

Fig. 1a

Fig. 1b

Fig. 2a

Fig. 2b

Fig. 2c

Fig. 3a

Fig. 3b

Fig. 4a

```
┌──────────┐
│   201    │
└──────────┘
   ↑   │
N=3│   ↓
┌──────────┐
│   202    │
└──────────┘
       │
       ↓
┌──────────┐
│   203    │
└──────────┘
```

200

Fig. 4b

```
┌──────────┐
│  201'    │
└──────────┘
   ↑   │
N=3│   ↓
┌──────────┐
│  202'    │
└──────────┘
       │
       ↓
┌──────────┐
│  203'    │
└──────────┘
```

200'

Fig. 5a

Fig. 5b

Europäisches
Patentamt

European
Patent Office

Office européen
des brevets

# EUROPÄISCHER RECHERCHENBERICHT

Nummer der Anmeldung

EP 17 18 3583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/087046 A1 (EPPENDORF AG [DE]) 9. Juni 2016 (2016-06-09) * Seite 13, Zeile 9 - Zeile 26; Ansprüche 1,6,8,10; Abbildungen 1,4 * * Seite 30, Zeile 20 - Zeile 24 * ----- | 1,3-14, 16 | INV. B01L3/02 |
| X,D | EP 0 571 100 A1 (WALLAC OY [FI]) 24. November 1993 (1993-11-24) * Seite 6, Zeile 12 - Zeile 19; Abbildungen 2,6,12,17 * ----- | 2-11,15, 16 | |
| A | DE 101 18 875 C1 (EPPENDORF AG [DE]) 12. September 2002 (2002-09-12) * das ganze Dokument * ----- | 2-11,15, 16 | |

**RECHERCHIERTE SACHGEBIETE (IPC)**

B01L

Der vorliegende Recherchenbericht wurde für alle Patentansprüche erstellt

| Recherchenort | Abschlußdatum der Recherche | Prüfer |
|---|---|---|
| Den Haag | 27. März 2018 | Veefkind, Victor |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 17 18 3583

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 6, 12-14(vollständig); 3-5, 7-11, 16(teilweise)

   Verfahren zur Erkennung mindestens eines Leistungszustandes der dem Pipettieren dienenden Ansaugmechanik einer Pipettiervorrichtung, wobei die Pipettiervorrichtung dazu eingerichtet ist, den vom Motor aufgenommenen Motorstrom als Messgröße zur Charakterisierung der physikalischen Arbeit zu erfassen; Pipettiervorrichtung und Programmcode

   ---

2. Ansprüche: 2, 15(vollständig); 3-5, 7-11, 16(teilweise)

   Verfahren zur Erkennung mindestens eines Leistungszustandes der dem Pipettieren dienenden Ansaugmechanik einer Pipettiervorrichtung, wobei die Pipettiervorrichtung eine Widerstandseinrichtung aufweist, und wobei die Pipettiervorrichtung einen den Druck in der Kolbenkammer messenden Drucksensor aufweist, Pipettiervorrichtung und Programmcode

   ---

**ANHANG ZUM EUROPÄISCHEN RECHERCHENBERICHT
ÜBER DIE EUROPÄISCHE PATENTANMELDUNG NR.**

EP 17 18 3583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-03-2018

| Im Recherchenbericht angeführtes Patentdokument | Datum der Veröffentlichung | Mitglied(er) der Patentfamilie | Datum der Veröffentlichung |
|---|---|---|---|
| WO 2016087046 A1 | 09-06-2016 | CN 106999937 A<br>DE 102014017971 A1<br>EP 3227026 A1<br>JP 2018504261 A<br>US 2017341072 A1<br>WO 2016087046 A1 | 01-08-2017<br>09-06-2016<br>11-10-2017<br>15-02-2018<br>30-11-2017<br>09-06-2016 |
| EP 0571100 A1 | 24-11-1993 | KEINE | |
| DE 10118875 C1 | 12-09-2002 | AT 380590 T<br>DE 10118875 C1<br>EP 1250956 A2<br>US 2002188410 A1 | 15-12-2007<br>12-09-2002<br>23-10-2002<br>12-12-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0658769 B1
- WO 9641200 A1
- EP 2494328 B1
- EP 0571100 A1
- US 20140137980 A1
- EP 06027038 A
- EP 1825915 A2